# EUROPÄISCHE PATENTSCHRIFT

(11) **EP 0 886 876 B1**
(45) Veröffentlichungstag und Bekanntmachung des Hinweises auf die Patenterteilung: **17.05.2000**
(21) Anmeldenummer: 97918021.3
(22) Anmeldetag: 13.03.1997
(51) Int. Cl.: H01H 9/06

(54) **ELEKTRISCHER SCHALTER**
ELECTRICAL SWITCH
INTERRUPTEUR ELECTRIQUE

(30) Priorität: 15.03.1996 DE 19610325; 15.03.1996 DE 19610326
(43) Veröffentlichungstag der Anmeldung: 30.12.1998
(73) Patentinhaber: Marquardt GmbH, 78604 Rietheim-Weilheim (DE)
(72) Erfinder: SCHÄFFELER, Alois, D-78549 Spaichingen (DE); NIKLEWSKI, Gerhard, D-78647 Trossingen (DE); LEIBINGER, Paul, D-78604 Rietheim-Weilheim (DE)
(74) Vertreter: Patentanwälte Eisele, Otten, Roth & Dobler
(86) Internationale Anmeldenummer: DE9700511
(87) Internationale Veröffentlichungsnummer: WO9737364

(56) Entgegenhaltungen:
- EP-A- 0 199 983
- EP-A- 0 512 316
- DE-A- 2 838 934
- DE-A- 3 121 033

## Beschreibung

Die Erfindung betrifft einen elektrischen Schalter nach dem Oberbegriff des Patentanspruchs 1.

Derartige elektrische Schalter dienen zum Ein- und Ausschalten von elektrischen Geräten, die von einer Spannungsquelle versorgt werden. Insbesondere werden solche Schalter in Elektrowerkzeugen mit einem Elektromotor eingesetzt. Gegebenenfalls kann der Schalter noch eine Steuerelektronik enthalten, so daß neben dem Ein- und Ausschalten des Elektromotors auch noch die Drehzahl des Elektromotors entsprechend eines vorgebbaren Sollwertes durch den Schalter einstellbar ist.

Aus der DE-A1-28 38 934 ist ein elektrischer Schalter zum Ein- und Ausschalten sowie zur Einstellung der Drehzahl für einen Elektromotor bekannt. Der Schalter besitzt ein Gehäuse mit zwei am bzw. im Gehäuse befindlichen Eingangsanschlüssen zum elektrischen Anschluß an die Spannungsquelle und zwei Ausgangsanschlüssen zum elektrischen Anschluß an den Elektromotor. Im Gehäuse sind zwei, jeweils aus einem Festkontakt sowie einem Schaltkontakt bestehende Kontaktsysteme und die Steuerelektronik angeordnet. Der Schaltkontakt ist wiederum als Kontaktwippe mit zwei Hebelarmen und einem Drehlager ausgebildet, wobei der mit dem Festkontakt zusammenwirkende, erste Hebelarm durch eine Federkraft in Schließrichtung zum Festkontakt belastet ist. Am Gehäuse befindet sich ein als Drücker ausgebildetes, manuell bewegbares Betätigungsorgan. Das Betätigungsorgan wirkt bei seiner Bewegung derart auf den zweiten Hebelarm am Schaltkontakt des jeweiligen Kcntaktsystems ein, daß der erste Hebelarm zum Schließen der elektrischen Verbindung des Kontaktsystems an den Festkontakt anlegbar ist. Weiter wirkt das Betätigungsorgan mit der Steuerelektronik zusammen, so daß von der Steuerelektronik eine der Stellung des Betätigungsorgans entsprechende Drehzahl am Elektromotor einstellbar ist.

Ein weiterer elektrischer Schalter zum Ein- und Ausschalten sowie zur Einstellung der Drehzahl für einen Elektromotor ist aus der DE-C2-40 38 787 bekannt. Im Gehäuse dieses Schalters befinden sich zwei Kontaktsysteme, die jeweils aus zwei Festkontakten und einer federbelasteten Kontaktbrücke bestehen, sowie eine Steuerelektronik. Der erste Festkontakt ist an einer mit einem Eingangsanschluß in Verbindung stehenden Kontaktbahn und der zweite Festkontakt an einem in Verbindung mit der Steuerelektronik stehenden Kontaktwinkel angeordnet. Die Kontaktbrücke wird vom Betätigungsorgan über einen Schaltnocken zum Schließen der elektrischen Verbindung des Kontaktsystems an die beiden Festkontakte angelegt. Das Kontaktsystem dieses Schalters ist toleranzempfindlich und auch montageaufwendig.

Schließlich ist aus der EP-A-0 512 316 ein Schalter für ein Akku-Elektrowerkzeug bekannt. Dieser Schalter besitzt eine in einem Gehäuse befindliche Steuerelektronik mit einem zugehörigen Leistungstransistor für die Drehzahlsteuerung eines Elektromotors. Im oberen Teil des Gehäuses befindet sich ein Umschalter für den Rechts- und Linkslauf des Elektromotors, an dessen Ausgangsanschlüssen die elektrische Verbindung zum Elektromotor hergestellt wird. Am unteren Teil des Gehäuses sind Eingangsanschlüsse angeordnet, die mit einem Akku in elektrischem Kontakt stehen. Einer der Eingangsanschlüsse ist mit einer im Gehäuse befindlichen Kontaktschiene verbunden, die entlang einer Gehäusewand durch das Gehäuse bis zum Umschalter verläuft. Der andere Eingangsanschluß ist mit einem Kontaktträger verbunden, der an einer weiteren Gehäusewand zu zwei Kontaktsystemen führt. In der oberen Hälfte des Gehäuses ist ein Lagerblech angeordnet, das einen Bolzen besitzt, der unter anderem als Verbindung zum Leistungstransistor dient. Weiter ist der Schaltkontakt des oberen Kontaktsystems am Lagerblech angeordnet. Vom Lagerblech führt wiederum ein Ansatz als elektrisches Verbindungselement zum Umschalter.

In handgeführten Elektrowerkzeugen werden solche Schalter im allgemeinen im Handgriff eingebaut. Aufgrund ihrer Funktionalität besitzen die bekannten Schalter einen komplexen Aufbau, so daß das Gehäuse eine bestimmte Baugröße erfordert, die wiederum im Handgriff untergebracht werden muß. In vielen Fällen ist es zur Steigerung der Ergonomie für das Elektrowerkzeug wünschenswert, den Handgriff schmaler oder schlanker auszugestalten. In diesen Fällen kann der Einbauraum für die bekannten Schalter nicht mehr ausreichend sein.

Der Erfindung liegt ausgehend von der EP-A-0 512 316 die Aufgabe zugrunde, einen elektrischen Schalter derart weiterzuentwickeln, daß bei gleicher oder gesteigerter Funktionalität eine Verkleinerung des benötigten Einbauraums erzielt wird.

Diese Aufgabe wird bei einem gattungsgemäßen elektrischen Schalter durch die kennzeichnenden Merkmale des Anspruchs 1 gelöst.

Die erfindungsgemäße Lösung gemäß dem Anspruch 1 beinhaltet im wesentlichen eine besondere Stromführung im Schalter, wodurch sich das Gehäuse des Schalters verkleinern läßt. Hierfür ist im Gehäuse eine Stromführungsschiene angeordnet, die in etwa in der Mitte des Gehäuses verläuft und das Gehäuse in Querrichtung bzw. in etwa senkrecht zur Bewegungsrichtung des Betätigungsorgans durchsetzt. Die Stromführungsschiene nimmt das Drehlager für den Schaltkontakt des Kontaktsystems auf.

Somit dient die Stromführungsschiene gleichzeitig als mechanisches Lagerteil für den Schaltkontakt und als elektrische Verbindung im Gehäuse des Schalters, wodurch das Gehäuse wesentlich kompakter ausgestaltet werden kann. Von der Stromführungsschiene besteht eine elektrische Verbindung zum ersten Ausgangsanschluß, jedoch keine direkte elektrische Verbindung zum ersten Eingangsanschluß. Vielmehr steht der Festkontakt des Kontaktsystems mit dem ersten Eingangsanschluß in direkter elektrischer Verbindung und der zweite Eingangsanschluß besitzt ein elektrisches Verbindungsteil zum zweiten Ausgangsanschluß. Bevorzugterweise wird der erfindungsgemäße Schalter an einem mit Netzwechselspannung betriebenen, handgeführten Elektrowerkzeug eingesetzt, so daß es sich bei den Eingangsanschlüssen um den Netzanschluß und bei den Ausgangsanschlüssen um die Feldanschlüsse für die Feldwicklung des Elektromotors handelt.

Die weiterbildende Lösung des Anspruchs 11 beinhaltet im wesentlichen eine besondere Ausgestaltung des Gehäuseinneren, so daß ein verkleinertes Gehäuse für den Schalter resultiert. Befinden sich im Gehäuseinneren zwei Kontaktsysteme, so sind diese beiden Kontaktsysteme auf einander gegenüberliegenden Seiten der Achse des Betätigungsorgans und im wesentlichen in Querrichtung im Gehäuseinneren angeordnet, wobei die Querrichtung die auf die Längsrichtung entsprechend der Bewegungsrichtung des Betätigungsorgans ungefähr senkrechte, in der Ebene der Achse des Betätigungsorgans verlaufende Richtung bezeichnet. Die Länge des Gehäuseinneren in Längsrichtung entspricht ungefähr der Länge des Schaltkontakts. Die in Tiefenrichtung, die sowohl ungefähr senkrecht zur Längs- als auch zur Querrichtung steht, verlaufende Tiefe des Gehäuseinneren ist geringfügig größer als die Breite des Schaltkontakts zuzüglich der Breite von gegebenenfalls im Gehäuseinneren enthaltenen zusätzlichen elektrischen Komponenten. Vorzugsweise beträgt die Tiefe ungefähr bis zur dreifachen Breite des Schaltkontakts.

Weitere Ausgestaltungen der Erfindung sind Gegenstand der Unteransprüche.

Der erste Hebelarm des Schaltkontakts ist durch eine Druckfeder o. dgl. in Schließrichtung zum Festkontakt belastet. Ein Nocken an einer in das Gehäuse führenden Achse des Betätigungsorgan wirkt auf den zweiten Hebelarm derart ein, daß sich der Schaltkontakt bei einem bestimmten Bewegungsweg des Betätigungsorgans an den Festkontakt anlegt.

Im Gehäuse kann sich eine auf einem Schaltungsträger, nämlich einer Leiterplatte, einer Keramikplatte o. dgl., befindliche Steuerelektronik mit einem Leistungshalbleiter, wie einem Triac, FET o. dgl., zur Drehzahleinstellung des Elektromotors befinden, wobei dann von der Stromführungsschiene eine elektrische Verbindung zur Steuerelektronik führt. Ein weiteres Kontaktsystem dient zur Überbrückung der Steuerelektronik. Eine elektrische Verbindung führt von der Steuerelektronik zum Festkontakt des weiteren Kontaktsystems.

Das weitere Kontaktsystem besitzt einen zweiten, als Kontaktwippe ausgebildeten Schaltkontakt, dessen Drehlager an der Stromführungsschiene in der Nähe des ersten Ausgangsanschlusses befindlich ist. Die beiden Schaltkontakte an der Stromführungsschiene sind einander in Querrichtung gegenüberliegend angeordnet.

Zur elektrischen Verbindung der Steuerelektronik mit der Stromführungsschiene sowie mit dem Festkontakt des weiteren Kontaktsystems dienen Kontaktfedern, die elastisch federnd an einer Kontaktfläche auf dem Schaltungsträger anliegen. Hierzu besitzt die Kontaktfeder eine ungefähr herzförmige, seitlich offene Gestalt. Die Kontaktfeder ist an einem Ansatz am Festkontakt des weiteren Kontaktsystems oder der Stromführungsschiene, gegebenenfalls leicht drehbar befestigt. Dazu kann die Kontaktfeder mittels eines U-förmigen Teils am Ansatz aufgesteckt und beispielsweise unter Vorsehen eines gewissen Spiels mit dem Ansatz verstemmt oder verrastet sein.

Falls für den Elektromotor ein Entstörkondensator benötigt wird, kann das Gehäuse des Schalters selbst zur Aufnahme des Entstörkondensators vorgesehen sein. Dazu ist am Beginn der Stromführungsschiene eine zwischen den beiden Eingangsanschlüssen verlaufende Verlängerung als erster Anschluß für den Entstörkondensator angeformt und ein zweiter Anschluß für den Entstörkondensator steht mit dem zweiten Eingangsanschluß in elektrischer Verbindung. Bevorzugterweise sind die Anschlüsse für den Entstörkondensator in der Art eines Steckanschlusses ausgebildet.

Vorteilhafterweise ist der mit dem ersten Eingangsanschluß in Verbindung stehende Festkontakt des ersten Kontaktsystems einstückig mit dem ersten Eingangsanschluß ausgebildet. So können die Eingangsanschlüsse als massives blockförmiges Teil mit einer Aufnahme für die Zuleitung zur Spannungsquelle ausgestaltet sein, wobei zur Befestigung der Zuleitung die Aufnahme einen Schraubanschluß besitzen kann. Eine Fläche des blockförmigen Teils am ersten Eingangsanschluß bildet den Festkontakt. Das elektrische Verbindungsteil am zweiten Eingangsanschluß besteht aus einem U-förmigen, auf den zweiten Eingangsanschluß aufgesteckten Anschlußteil. Um einen guten Kontakt zu gewährleisten, können sich am U-förmigen Anschlußteil Federschenkel befinden, so daß das U-förmige Anschlußteil mit einem Anpreßdruck am blockförmigen Teil des zweiten Eingangsanschlusses anliegt. Das U-förmige Anschlußteil besitzt weiter eine Anschlußfahne, die als zweiter Ausgangsanschluß dient. Gleichzeitig ist am U-förmigen Anschlußteil der zweite Anschluß für den Entstörkondensator angeformt. Zweckmäßigerweise ist dann das U-förmige Anschlußteil mit der Anschlußfahne und dem zweiten Anschluß für den Entstörkondensator einstückig ausgebildet. Der Festkontakt für das weitere Kontaktsystem kann ebenfalls mit einer Anschlußfahne, die als erster Ausgangsanschluß dient, versehen sein. Auch hierbei bietet es sich an, den Festkontakt und die Anschlußfahne einstückig auszubilden.

Die Stromführungsschiene, die Eingangsanschlüsse, die Ausgangsanschlüsse, das U-förmige Anschlußteil sowie die sonstigen stromführenden Teile bestehen aus Materialien mit guter elektrischer Leitfähigkeit, wie Kupfer, Messing oder sonstige Metalle.

Bevorzugterweise können die Stromführungsschiene und der erste Eingangsanschluß aus Kupfer, der zweite Eingangsanschluß sowie das U-förmige Anschlußteil aus Messing und die Kontaktfeder zum Schaltungsträger aus Bronze, Beryllium-Kupfer o. dgl. bestehen.

Bevorzugterweise wird weiterhin das Gehäuse derart ausgestaltet, daß die in Querrichtung verlaufende Breite des Gehäuseinneren im wesentlichen der Summe der Höhen der beiden Kontaktsysteme und des Durchmessers der Achse des Betätigungsorgans entspricht. Anstelle des Durchmessers der Achse des Betätigungsorgans kann auch die Höhe eines an dieser Achse befindlichen, zur Einwirkung auf die Kontaktsysteme dienenden Schlittens relevant sein. Gegebenenfalls kann noch die Höhe des Eingangs- und/oder Ausgangsanschlusses hinzukommen, falls diese ebenfalls im Gehäuseinneren angeordnet sind.

In einer weiteren Ausbildung ist das Gehäuse in einer durch die Längs- und Querrichtung aufgespannten Ebene in einen Sockel und einen Deckel geteilt. Der Sockel ist zur Aufnahme der Kontaktsysteme und einer als elektrischen Leitung zwischen den Kontaktsystemen dienenden Stromführungsschiene sowie gegebenenfalls des Schlittens oder der Achse des Betätigungsorgans vorgesehen. Im Sockel oder im Deckel kann eine Führung und Niederhaltung für den Schlitten angeordnet sein. Für das Betätigungsorgan kann an der Außenseite des Sockels oder des Deckels wenigstens eine in Längsrichtung, parallel zur Achse des Betätigungsorgans verlaufende Führung befindlich sein. Das Betätigungsorgan übergreift diese Führung, so daß in Längsrichtung eine kompaktere Anordnung des Betätigungsorgans am Gehäuse möglich ist.

Der Schaltungsträger für die Steuerelektronik ist in einer durch die Längs- und Querrichtung aufgespannten, parallel zur Achse des Betätigungsorgans verlaufenden Ebene im Gehäuse derart angeordnet, daß ein am Schlitten befindlicher Schleifer in Kontakt mit einer Potentiometerbahn auf dem Schaltungsträger steht. Dadurch ist an der Potentiometerbahn ein der Stellung des Betätigungsorgans entsprechender Spannungswert abnehmbar, der wiederum von der Steuerelektronik als Sollwert für die einzustellende Drehzahl verwendet wird. Zur Reduzierung der Tiefe des Gehäuseinneren ist der Leistungshalbleiter ungehäust, direkt auf dem Schaltungsträger angeordnet, beispielsweise auf dem Schaltungsträger verlötet, wodurch die ansonsten beträchtlich auftragende Höhe eines Gehäuses für den Leistungshalbleiter entfällt. Der Leistungshalbleiter und die Bestückungsseite des Schaltungsträgers sind den Schaltkontakten zugewandt, und der Schaltungsträger ist direkt oder über einen Kühlkörper, wie einer Kupferplatte o. dgl., mit seiner der Bestückungsseite gegenüberliegenden Seite an einer Wand im Gehäuseinneren, beispielsweise im Deckel angelegt.

Zur Begrenzung der mittels des Betätigungsorgans einstellbaren Drehzahl kann am Betätigungsorgan ein Stellrad für die Verstellung eines mit dem Gehäuse zusammenwirkenden Anschlages, der den Bewegungsweg des Betätigungsorgans begrenzt, angeordnet sein. Zur Arretierung des Betätigungsorgans in bestimmten Bewegungsstellungen kann weiter ein am Betätigungsorgan gehaltener und gegebenenfalls an der Außenseite des Gehäuses geführter Arretierschieber mit einem Arretierknopf zusammenwirken. Der Arretierschieber ist mittels des Stellrades verstellbar und trägt an der dem Stellrad zugeordneten Seite den Anschlag. Der Arretierknopf ist in einem an der Außenseite des Gehäuses befindlichen Dom derart gegen eine im Dom angeordnete, in den Arretierknopf eintauchende Feder beweglich, daß der Arretierknopf voll im Dom versenkbar ist. Dadurch läßt sich die Höhe des Doms und folglich weiter die Tiefe des Gehäuses verringern. Die Achse des Stellrads ist in Querrichtung versetzt zur Achse des Betätigungsorgans. Der Arretierschieber ist ebenfalls in Querrichtung und gegebenenfalls in Tiefenrichtung versetzt zur Achse des Betätigungsorgans angeordnet. Diese Anordnung des Stellrades und des Arretierschiebers im Gegensatz zu herkömmlichen Schaltern gestattet wiederum eine kompakte Ausgestaltung des Gehäuses.

Direkt am Gehäuse kann sich eine Aufnahme für den Entstörkondensator befinden, wobei die Aufnahme sich in Querrichtung an der Seite, an der sich die Eingangsanschlüsse für den Schalter befinden, an das Gehäuse derart anschließt, daß der Entstörkondensator zugehörige Anschlüsse an einem der Eingangsanschlüsse und der Stromführungsschiene kontaktieren kann. Die Aufnahme besteht bevorzugterweise aus zwei Teilen, die insbesondere einstückig mit dem Sockel und dem Deckel ausgebildet sind. In der Aufnahme kann sich noch eine Freisparung zur Außenseite des Gehäuses für einen Erdungsanschluß des Entstörkondensators befinden.

Es ist bei einem am Netz betriebenen Elektrowerkzeug zweckmäßig, die Zugentlastung für das Netzkabel direkt am Gehäuse anzubringen. Die Zugentlastung ist in Querrichtung an der Seite, an der sich die Eingangsanschlüsse befinden, oder gegebenenfalls an der Aufnahme für den Entstörkondensator angeordnet. Vorzugsweise ist die Zugentlastung einstückig in den Sockel des Gehäuses integriert und besteht aus einer Kabelaufnahme mit einem abstehenden Steg und einer in den Steg eingehängten, mit der Kabelaufnahme verschraubbaren Schelle, wobei Netzkabel mit unterschiedlichen Durchmessern aufgenommen werden können. Zur Vereinfachung der Montage ist die Schelle bereits an einer Seite der Kabelaufnahme mit einer Sollbruchstelle angespritzt, so daß die Schelle bei der Montage des Kabels abgebrochen und zur Komplettierung der Zugentlastung in den Steg eingehängt werden kann.

Für einen zur Anordnung in einem schlanken Handgriff eines Elektrowerkzeugs vorgesehenen elektrischen Schalter ist besonders bevorzugt, daß die Länge des Gehäuseinneren zwischen 18 und 25 mm, die Breite des Gehäuseinneren zwischen 30 und 40 mm, und die Tiefe des Gehäuseinneren zwischen 10 und 20 mm betragen. Befindet sich am Gehäuse eine Aufnahme für den Entstörkondensator, so kann diese eine Länge zwischen 20 und 35 mm sowie eine Breite zwischen 15 und 30 mm aufweisen. Ist weiter eine Zugentlastung am Gehäuse angeordnet, so besitzt diese eine Länge zwischen 20 und 30 mm sowie eine Breite zwischen 10 und 20 mm.

Beim erfindungsgemäßen Schalter wird eine Optimierung der Stromführung im Gehäuse des elektrischen Schalters und/oder eine Optimierung der Gehäusegestaltung erreicht, so daß das Gehäuse des Schalters eine kompakte und schlanke Ausgestaltung besitzen kann. Insbesondere wenn ein Stellrad und eine Arretierung am Schalter vorgesehen sind, kann das Gehäuse dennoch kompakt gehalten werden. Wird der Schalter an einem handgeführten Elektrowerkzeug eingesetzt, so kann aufgrund des verringerten Einbauraums für den Schalter auch der Handgriff des Elektrowerkzeugs schlanker als bisher ausgestaltet sein, was die Ergonomie des Elektrowerkzeugs steigert. Weitere mit der Erfindung erzielte Vorteile bestehen darin, daß eine Reduzierung der Teilezahl des Schalters erzielt wird, insbesondere wenn der Eingangsanschluß einstückig mit dem Festkontakt des Kontaktsystems, der Ausgangsanschluß einstückig mit dem Festkontakt des weiteren Kontaktsystems usw. ausgebildet ist sowie die Zugentlastung am Gehäuse integriert ist. Eine weitere Optimierung der Stromführung und Reduktion der Teilezahl wird durch die Integration des Entstörkondensators im Schalter erzielt, da dadurch die ansonsten notwendige Verkabelung entfällt. Die Reduzierung der Teilezahl zieht wiederum eine Vereinfachung der Montage und insgesamt eine Verbilligung des Schalters nach sich. Zudem trägt die optimierte Stromführung im Schalter auch zur Erhöhung der Funktionssicherheit des Schalters bei. Schließlich vereinfacht sich auch die Verkabelung im Elektrowerkzeug selbst.

Ausführungsbeispiele der Erfindung sind in den Zeichnungen dargestellt und werden im folgenden näher beschrieben. Es zeigen
- Fig. 1: ein Prinzipschaltbild für die Anordnung des elektrischen Schalters in einem Elektrowerkzeug,
- Fig. 2: einen Längsschnitt durch einen elektrischen Schalter für ein Elektrowerkzeug,
- Fig. 3: einen Schnitt entlang der Linie 3-3 in Fig. 2,
- Fig. 4: einen Schnitt entlang der Linie 4-4 in Fig. 3,
- Fig. 5: einen Schnitt entlang der Linie 5-5 in Fig. 2,
- Fig. 6: den zweiten Eingangsanschluß mit Anschlußteil als Einzelteil,
- Fig. 7: das Anschlußteil gemäß Richtung VII aus Fig. 6,
- Fig. 8: den ersten Ausgangsanschluß als Einzelteil,
- Fig. 9: den ersten Ausgangsanschluß gemäß Richtung IX aus Fig. 8,
- Fig. 10: die Stromführungsschiene als Einzelteil,
- Fig. 11: die Stromführungsschiene gemäß Richtung XI aus Fig. 10,
- Fig. 12: das Betätigungsorgan als Einzelteil, teilweise im Schnitt,
- Fig. 13: einen Schalter wie in Fig. 2 in einer weiteren Ausführungsform,
- Fig. 14: das Anschlußteil gemäß Richtung XIV aus Fig. 6 und
- Fig. 15: einen Ausschnitt des Gehäuses im Bereich der Zugentlastung.

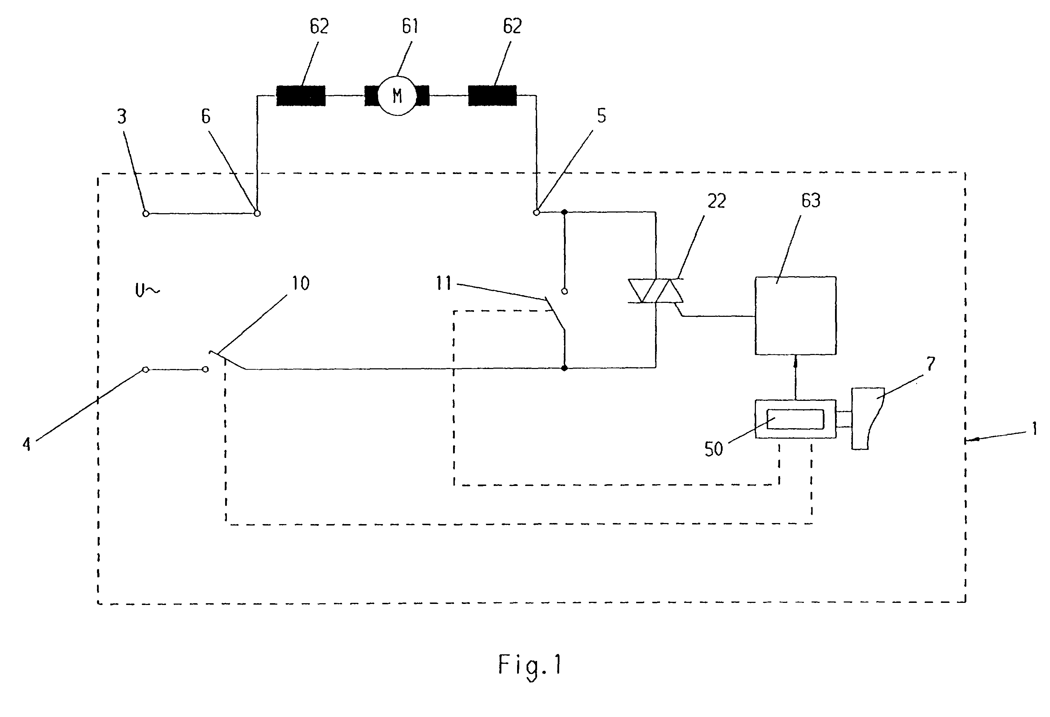

Der erfindungsgemäße elektrische Schalter 1 wird in einem elektrischen Gerät verwendet, das von einer Spannungsquelle versorgt wird. Bevorzugterweise wird der elektrische Schalter 1 in einem Elektrowerkzeug, wie einer Bohrmaschine, einem Bohrhammer o. dgl., eingesetzt. In Fig. 1 ist das Prinzipschaltbild für die Anordnung des elektrischen Schalters 1 in einem Elektrowerkzeug, das von der Netzwechselspannung U versorgt wird, näher gezeigt.

Das Elektrowerkzeug besitzt einen Elektromotor 61 mit Feldwicklungen 62. Der Elektromotor 61 wird durch Betätigung des Schalters 1, der sich im Handgriff des Elektrowerkzeugs befindet, vom Benutzer ein- und ausgeschaltet sowie dessen Drehzahl mittels des Schalters 1 eingestellt. Zur Betätigung besitzt der Schalter 1 ein als Drücker ausgebildetes Betätigungsorgan 7, das auf zwei Kontaktsysteme 10, 11 und eine Potentiometerbahn 50 einwirkt. Die Drehzahleinstellung des Elektromotors 61 erfolgt mittels einer Steuerelektronik 63 mit einem Leistungshalbleiter 22, wie einem Triac o. dgl., die in der Art einer Phasenanschnittsteuerung ausgebildet ist. Durch Bewegung des Betätigungsorgans 7 wird zunächst das Kontaktsystem 10 geschlossen und die Netzwechselspannung U über den Leistungshalbleiter 22 an den Elektromotor 61 gelegt. Eine der Stellung des Betätigungsorgans 7 entsprechende Steuerspannung wird von der Potentiometerbahn 50 abgenommen und der Steuerelektronik 63 zugeführt. Die Steuerelektronik 63 zündet in funktionaler Abhängigkeit von dieser Steuerspannung den Leistungshalbleiter 22 beim entsprechenden Phasen- bzw. Stromflußwinkel der Netzwechselspannung U, so daß letztendlich die der Stellung des Betätigungsorgans 7 entsprechende Drehzahl des Elektromotors 61 eingestellt und gegebenenfalls geregelt wird. Befindet sich das Betätigungsorgan 7 in seiner Maximalstellung, so wird das Kontaktsystem 11 geschlossen, wodurch die Steuerelektronik 63 und der Leistungshalbleiter 22 überbrückt werden. Damit liegt die volle Netzwechselspannung U am Elektromotor 61 an und dieser bewegt sich mit der maximalen Drehzahl.

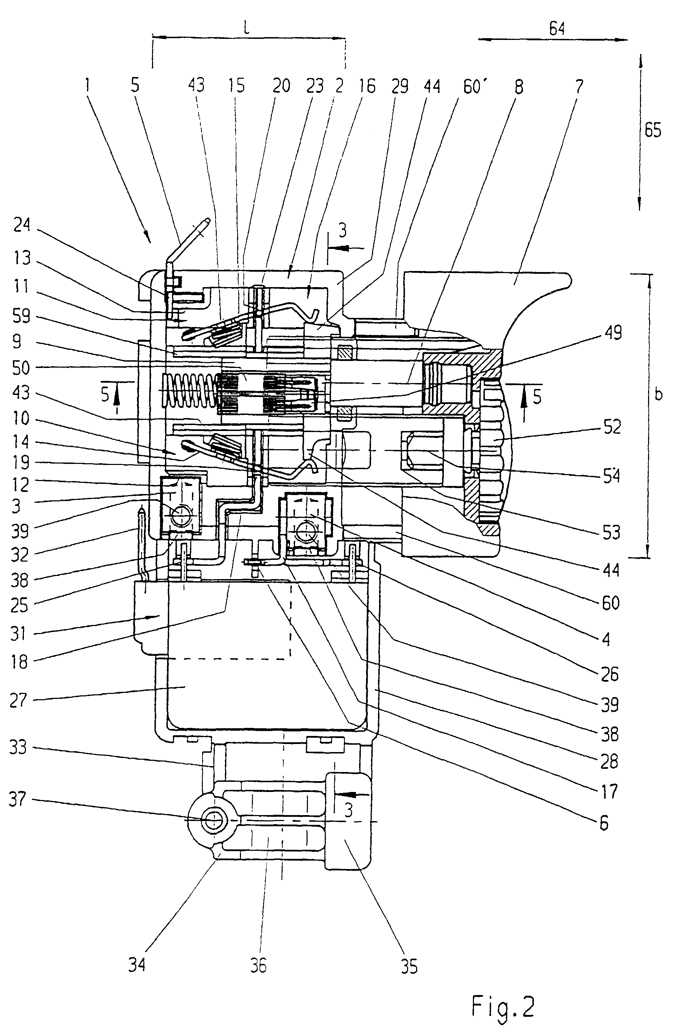

Der Schalter 1 besitzt zur Aufnahme der elektrischen Komponenten, wie der Kontaktsysteme 10, 11 u. dgl., ein Gehäuse 2, wie näher aus Fig. 2 hervorgeht. Am Gehäuse 2 befinden sich elektrische Eingangsanschlüsse 3, 4 zum Anschluß des Schalters 1 an die Netzwechselspannung U und Ausgangsanschlüsse 5, 6 zur Verbindung des Schalters 1 mit den Feldwicklungen 62 des Elektromotors 61. Die Eingangsanschlüsse 3, 4 dienen damit als Netzanschluß und die Ausgangsanschlüsse 5, 6 als Feldanschluß. Das Betätigungsorgan 7 ist an einer in das Gehäuse 2 führenden Achse 8 befestigt und ist manuell durch den Benutzer gegen eine Rückstellkraft, die beispielsweise von einer auf die Achse 8 wirkenden Druckfeder erzeugt wird, bewegbar, wobei das Betätigungsorgan 7 bei seiner Bewegung auf die Kontaktsysteme 10, 11 einwirkt.

Die im Gehäuseinneren 16 des Gehäuses 2 befindlichen Kontaktsysteme 10, 11 bestehen jeweils aus einem Festkontakt 12, 13 sowie einem Schaltkontakt 14, 15. Der Schaltkontakt 14, 15 ist als drehbar gelagerte Kontaktwippe mit zwei Hebelarmen ausgebildet und durch die Federkraft einer Druckfeder 43 in Schließrichtung zum Festkontakt 12, 13 belastet, indem die Druckfeder 43 am ersten, mit dem Festkontakt 12, 13 zusammenwirkenden Hebelarm angeordnet ist.

Selbstverständlich kann anstelle einer Druckfeder auch eine sonstige Feder, beispielsweise eine Zugfeder Verwendung finden. Bevorzugterweise ist für jedes Kontaktsystem 10, 11 ein Nocken 44 an einem Schlitten 9, der sich an der in das Gehäuse 2 führenden Achse 8 des Betätigungsorgans 7 befindet, angeordnet, wobei der Nocken 44 dem jeweiligen Kontaktsystem 10, 11 zugewandt ist. Der Nocken 44 wirkt derart auf den zweiten Hebelarm des Schaltkontakts 14, 15 ein, daß sich der erste Hebelarm des Schaltkontakts 14, 15 bei einem bestimmten Bewegungsweg des Betätigungsorgans 7 an den jeweiligen Festkontakt 12, 13 anlegt, womit die elektrische Verbindung des jeweiligen Kontaktsystems 10, 11 geschlossen ist.

Bezeichnet man die in Bewegungsrichtung der Achse 8 und des Betätigungsorgans 7 verlaufende Richtung gemäß dem Pfeil 64 als Längsrichtung und die dazu senkrechte, in der Zeichenebene der Fig. 2 verlaufende Richtung gemäß dem Pfeil 65 als Querrichtung, so erkennt man insbesondere anhand der Fig. 2, daß die beiden Kontaktsysteme 10, 11 in Querrichtung einander gegenüberliegen. Die beiden Kontaktsysteme 10, 11 sind zudem auf den einander gegenüberliegenden Seiten der Achse 8 des Betätigungsorgans 7 derart angeordnet, daß sie sich im wesentlichen in Querrichtung im Gehäuseinneren 16 übereinander befinden. Die Stromführung im elektrischen Schalter 1 für diese Anordnung der Kontaktsysteme 10, 11 ist ebenfalls in Fig. 2 näher zu sehen.

Der Festkontakt 12 des Kontaktsystems 10 steht mit dem ersten Eingangsanschluß 3 in direkter elektrischer Verbindung. Der zweite Eingangsanschluß 4 besitzt ein im Gehäuse 2 angeordnetes elektrisches Verbindungsteil 17 zum zweiten Ausgangsanschluß 6. Bevorzugterweise sind die Eingangsanschlüsse 3, 4 als massives blockförmiges Teil mit einer Aufnahme 38 für die jeweilige Zuleitung des Netzkabels ausgebildet. Die Aufnahme 38 besitzt wiederum einen Schraubanschluß 39 zum Befestigen der Zuleitung. Der Festkontakt 12 ist einstückig mit dem ersten Eingangsanschluß 3 ausgebildet und in den Eingangsanschluß integriert, indem die obere Fläche am blockförmigen Teil des ersten Eingangsanschlusses 3 selbst den Festkontakt 12 bildet. Alternativ ist es auch möglich, einen vorgefertigten Kontakt an dieser Oberfläche anzubringen. Die blockförmigen Teile für die Eingangsanschlüsse 3, 4 können aus Kupfer, Messing o. dgl. hergestellt sein.

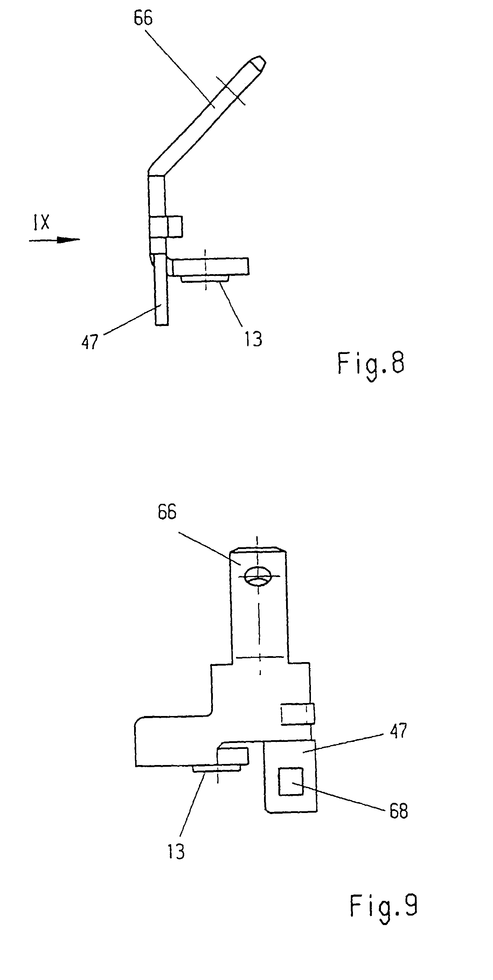

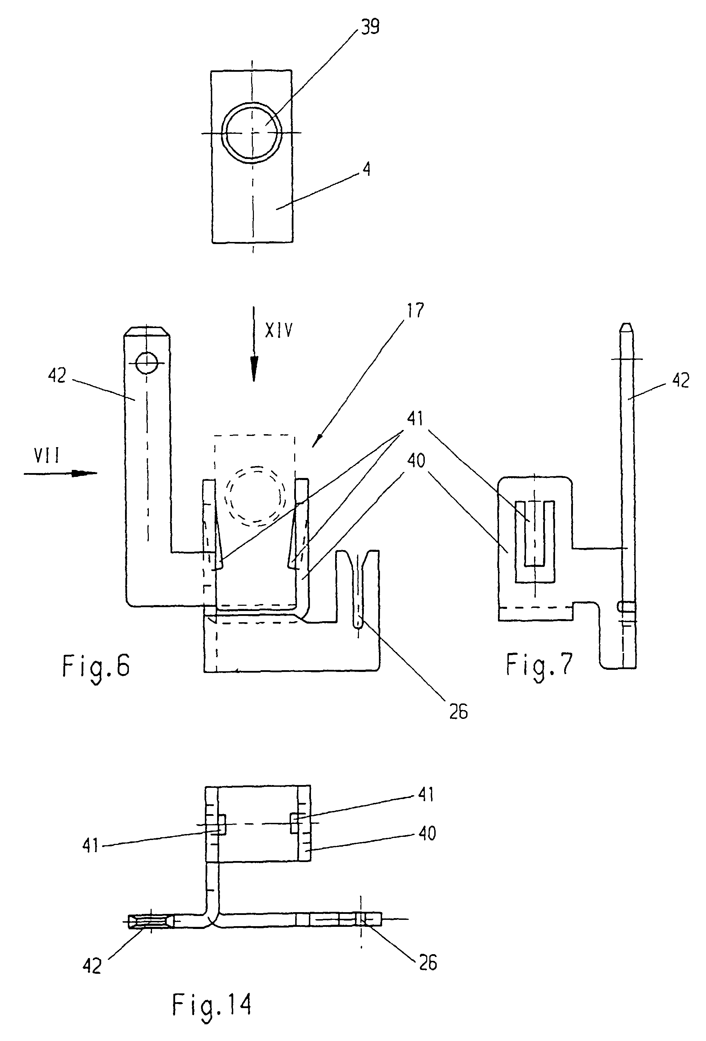

In einer Weiterbildung besteht das elektrische Verbindungsteil 17 am zweiten Eingangsanschluß 4 aus einem U-förmigen Anschlußteil 40, wie in Fig. 6 und 14 zu sehen ist, das auf den blockförmigen Teil des zweiten Eingangsanschlusses 4 aufgesteckt ist. Dazu besitzt das U-förmige Anschlußteil 40 Federschenkel 41, die aus dem U-förmigen Anschlußteil 40 freigeschnitten sind, wie aus Fig. 7 ersichtlich ist, so daß das U-förmige Anschlußteil 40 mit einer gewissen Anpreßkraft am Eingangsanschluß 4 anliegt. Weiter besitzt das Anschlußteil 40 eine das Gehäuse 2 durchdringende Anschlußfahne 42, die den zweiten Ausgangsanschluß 6 bildet. Das U-förmige Anschlußteil 40 mitsamt der Anschlußfahne 42 können als einstückiges Stanzbiegeteil, beispielsweise aus Messing hergestellt sein.

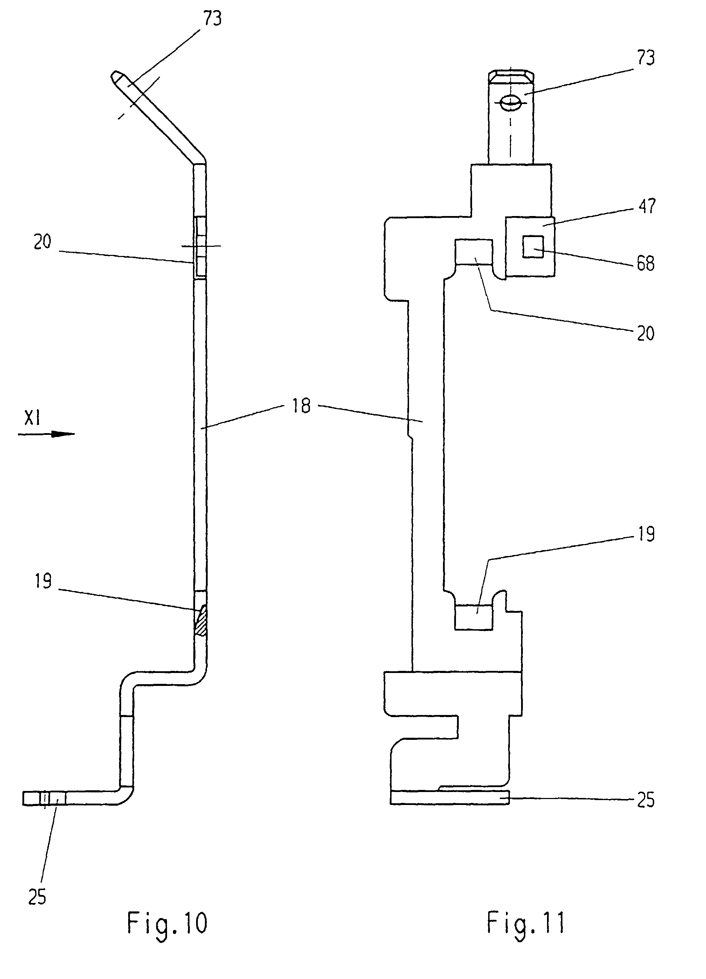

Im Gehäuseinneren 16 verläuft in etwa im mittleren Bereich des Gehäuses 2, im wesentlichen in Querrichtung gemäß dem Pfeil 65 eine Stromführungsschiene 18, wie wiederum der Fig. 2 entnehmbar ist. Die Stromführungsschiene 18 beginnt in etwa im Bereich zwischen den beiden Eingangsanschlüssen 3, 4 und endet in etwa im Bereich des ersten Ausgangsanschlusses 5, der im wesentlichen den Eingangsanschlüssen 3, 4 gegenüberliegt. An der Stromführungsschiene 18 ist das Drehlager 19 des Schaltkontakts 14 des ersten Kontaktsystems 10 in der Art eines Schneidenlagers in der Nähe der Eingangsanschlüsse 3, 4 angeordnet. Die Stromführungsschiene 18 stellt die elektrische Verbindung zum zweiten Kontaktsystem 11 her, wobei das Drehlager 20 des Schaltkontakts 15 ebenfalls an der Stromführungsschiene 18 in der Nähe des ersten Ausgangsanschlusses 5 angeordnet ist. Die als Stanzbiegeteil, beispielsweise aus Kupfer hergestellte Stromführungsschiene 18 ist als Einzelteil in den Fig. 10 und 11 näher gezeigt.

Über das zweite Kontaktsystem 11 ist die elektrische Verbindung von der Stromführungsschiene 18 zum ersten Ausgangsanschluß 5 bei Überbrückung der Steuerelektronik 63 hergestellt. Der Festkontakt 13 für das weitere Kontaktsystem 11 ist mit einer das Gehäuse 2 durchdringenden Anschlußfahne 66, die als erster Ausgangsanschluß 5 dient, versehen. Wie insbesondere aus Fig. 8 und 9 hervorgeht, in denen der Festkontakt 13 als Einzelteil gezeigt ist, kann der Festkontakt 13 und die Anschlußfahne 66 einstückig als Stanzbiegeteil, beispielsweise aus Kupfer ausgebildet sein.

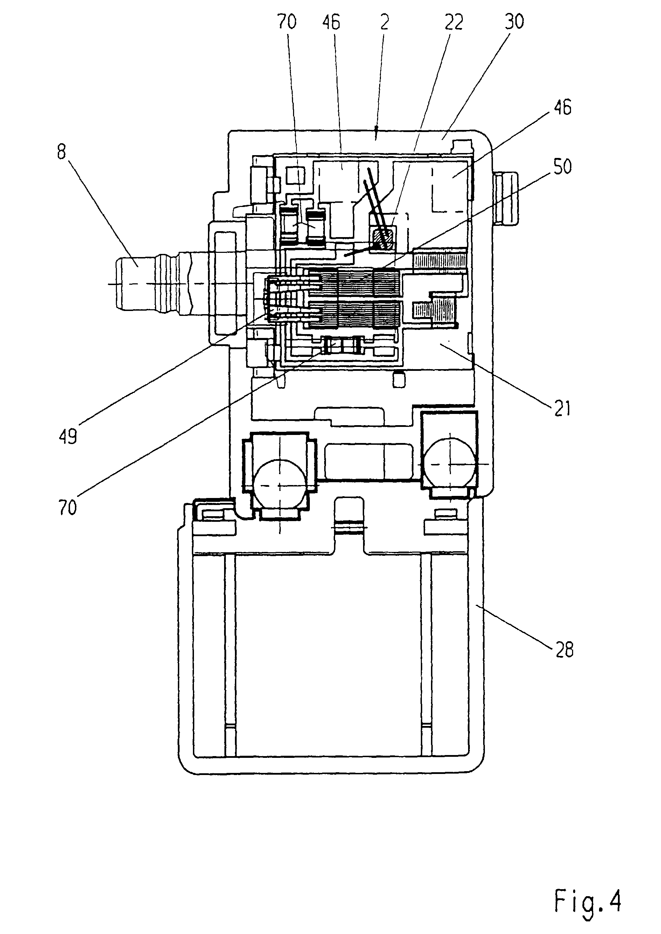

Ist das zweite Kontaktsystem 11 nicht geschlossen, so wird die elektrische Verbindung von der Stromführungsschiene 18 zum ersten Ausgangsanschluß 5 über den Leistungshalbleiter 22 in der Steuerelektronik 63 hergestellt. Hierzu besteht vom Festkontakt 13 des Kontaktsystems 11 eine elektrische Verbindung 24 sowie von der Stromführungsschiene 18 eine elektrische Verbindung 23 zur Steuerelektronik 63. Die Steuerelektronik 63 befindet sich auf einem Schaltungsträger 21, der im Gehäuse 2 angeordnet ist, wie in Fig. 4 zu sehen ist. Bei dem Schaltungsträger 21 kann es sich um eine Leiterplatte, eine Keramikplatte o. dgl. handeln. Auf dem Schaltungsträger 21 befindet sich weiter der Leistungshalbleiter 22 sowie die Potentiometerbahn 50, mit der ein am Schlitten 9 befindlicher und damit durch das Betätigungsorgan 7 beweglicher Schleifer 49 in Kontakt steht.

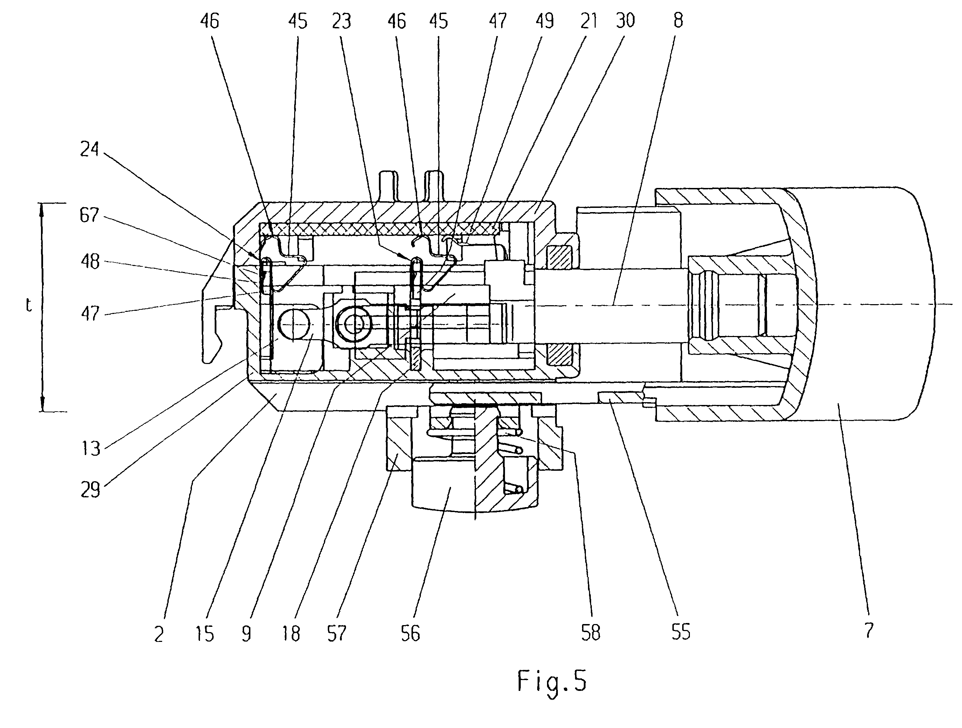

Die elektrischen Verbindungen 23, 24 sind vorteilhafterweise als Kontaktfedern 45 ausgebildet. Wie in Fig. 5 zu sehen ist, besitzt die Kontaktfeder 45 eine ungefähr herzförmige Gestalt, die seitlich, der Stromführungsschiene 18 bzw. einem Ansatz 47 am Festkontakt 13 zugewandt, offen ausgebildet ist. Die Kontaktfeder 45 liegt elastisch federnd an einer Kontaktfläche 46 auf dem Schaltungsträger 21 an. Die Kontaktfeder 45 kann aus Bronze, Beryllium-Kupfer o. dgl. bestehen. Es bietet sich an, die Kontaktfeder 45 an einem Ansatz 47 am Festkontakt 13 des weiteren Kontaktsystems 11 oder der Stromführungsschiene 18 zu befestigen. Diese Befestigung erfolgt derart, daß die Kontaktfeder 45 am Ansatz 47 leicht drehbar ist. Beispielsweise kann die Kontaktfeder 45 mittels eines U-förmigen Teils 48 am Ansatz 47 aufgesteckt und unter Vorsehen eines gewissen Spiels mit dem Ansatz 47 verstemmt sein. Es ist auch möglich, das U-förmige Teil 48 mittels eines Federschenkels 67, der in ein in Fig. 9 oder 11 sichtbares Fenster 68 am Ansatz 47 eingreift, unter Erzielung einer leichten Drehbarkeit zu verrasten. Dadurch gelingt ein Ausgleich von Unebenheiten und Toleranzen auf dem Schaltungsträger 21. Die beschriebene Ausgestaltung der Kontaktfeder 45 bietet vorteilhafterweise eine große Federkraft und trotzdem eine niedrige Bauhöhe.

Am Gehäuse 2 kann, wie in Fig. 2 zu sehen ist, eine Aufnahme 28 für einen Entstörkondensator 27 angeordnet sein. Die Aufnahme 28 schließt sich in Querrichtung gemäß dem Pfeil 65, an der Seite, an der sich die Eingangsanschlüsse 3, 4 befinden, an das Gehäuse 2 an. Zur Kontaktierung mit dem Entstörkondensator 27 ist am Beginn der Stromführungsschiene 18 eine zwischen den beiden Eingangsanschlüssen 3, 4 verlaufende Verlängerung als erster Anschluß 25 angeformt. Ein zweiter Anschluß 26 für den Entstörkondensator 27 steht mit dem zweiten Eingangsanschluß 4 über das elektrische Verbindungsteil 17 in Verbindung. Die Anschlüsse 25, 26 für den Entstörkondensator 27 sind in der Art eines Steckanschlusses ausgebildet, so daß der Entstörkondensator 27 zur Montage lediglich in die Aufnahme 28 unter Anstecken an die Anschlüsse 25, 26 einzulegen ist.

Wie man insbesondere anhand von Fig. 10 und 11 sieht, bildet die Stromführungsschiene 18 ein einstückiges, gemeinsames Lagerteil mit den Drehlagern 19, 20 für den Schaltkontakt 14 des Kontaktsystems 10 zur Versorgungsspannung, für den Schaltkontakt 15 des Kontaktsystems 11 zur Überbrückung der Steuerelektronik 63 und für den Anschluß 25 des Entstörkondensators 27. Am U-förmigen Anschlußteil 40 ist, wie in Fig. 6 und 7 zu sehen ist, auch noch der zweite Anschluß 26 für den Entstörkondensator 27 einstückig angeformt. Man erhält somit eine Art Stützpunktklemme für die Verbindung zu der Feldwicklung 62 des Elektromotors 61 über die Anschlußfahne 42, zu dem Entstörkondensator 27 und zu dem zweiten Eingangsanschluß 4 zum Netz.

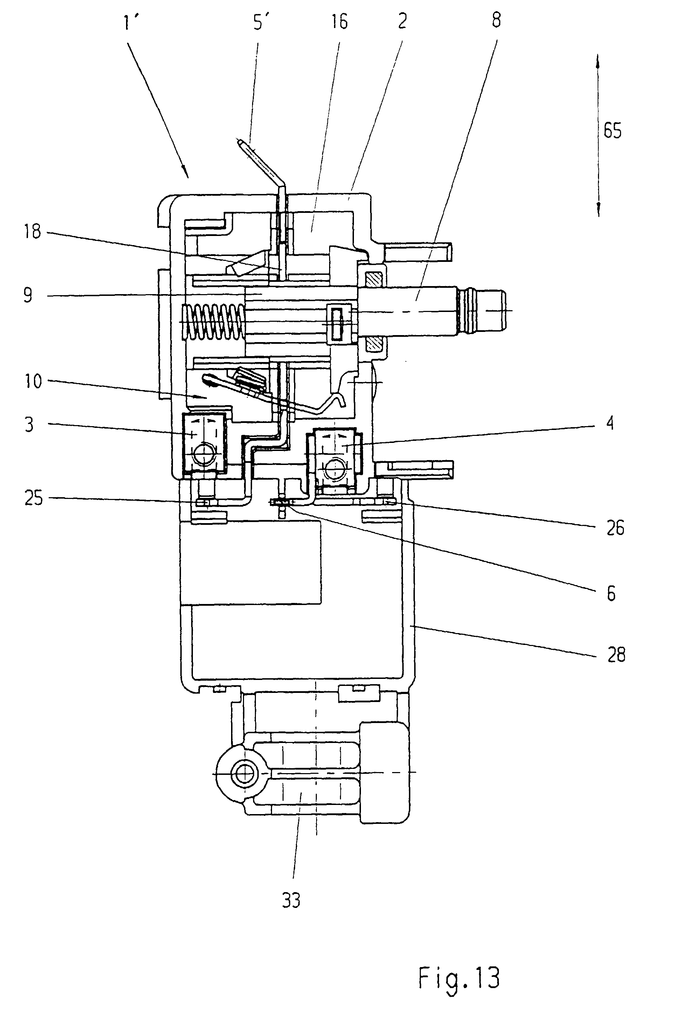

Bei einer anderen Ausführungsform der Erfindung, die in Fig. 13 gezeigt ist, handelt es sich um einen Ein-Aus-Schalter 1' ohne Steuerelektronik für ein Elektrowerkzeug. Da keine Steuerelektronik vorhanden ist, entfällt auch das weitere Kontaktsystem für die Überbrückung, so daß sich im Gehäuse 2 lediglich das Kontaktsystem 10 zum Schalten der Versorgungsspannung befindet. Am Ende der in Querrichtung gemäß Pfeil 65 verlaufenden Stromführungsschiene 18 ist an der dem Kontaktsystem 10 gegenüberliegenden Seite der Ausgangsanschluß 5' zur Feldwicklung 62, beispielsweise als in Fig. 10 und 11 gezeigte, das Gehäuse 2 durchdringende Anschlußfahne 73, direkt einstückig angeformt. Auch bei dieser Ausführungsform des Schalters 1' ist somit im wesentlichen dieselbe Stromführung im Gehäuseinneren 16 wie bei dem mit einer Steuerelektronik 63 versehenen Schalter 1 vorhanden.

Durch die beschriebene Anordnung der Kontaktsysteme 10, 11 im Gehäuse 2 und/oder der Stromführung im Gehäuseinneren 16 gelingt es, einen kompakten, kleinbauenden und hochintegrierten Schalter 1 auszubilden, der insbesondere zum Einsatz in Elektrowerkzeugen mit schlanken Handgriffen geeignet ist. In einer Weiterbildung der Erfindung trägt die Ausgestaltung des Gehäuses 2 noch weiter zur Erhöhung der Kompaktheit bei.

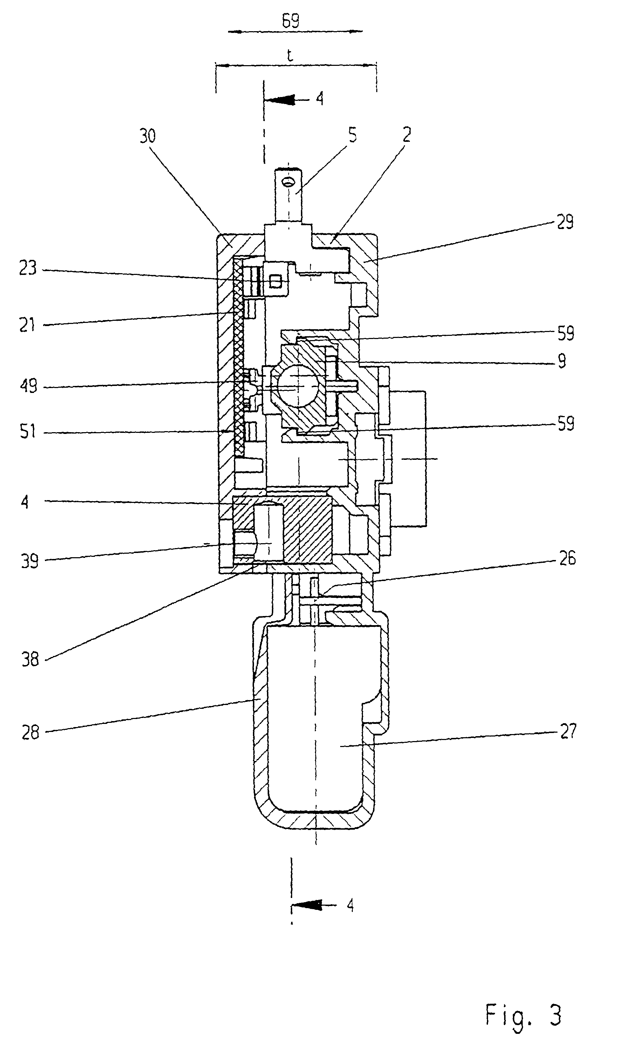

Für diese Weiterbildung bietet es sich an, das Gehäuse 2 in zwei Teile einzuteilen. Dazu ist das Gehäuse 2 in einer durch die Längs- und Querrichtung gemäß den Pfeilen 64 und 65 der Fig. 2 aufgespannten Trennebene in einen Sockel 29 und einen Deckel 30 geteilt. Die Trennebene verläuft in der Ansicht nach Fig. 3 ungefähr entlang der Linie 4-4. Der in Fig. 2 näher gezeigte Sockel 29 dient zur Aufnahme der Einzelteile des Schalters 1, nämlich unter anderem der Kontaktsysteme 10, 11, der Eingangsanschlüsse 3, 4, der Ausgangsanschlüsse 5, 6 und der Stromführungsschiene 18. Bevorzugterweise befinden sich im Sockel 29 weiter der Schlitten 9 und der in das Gehäuseinnere 16 ragende Teil der Achse 8 des Betätigungsorgans 7. Der Deckel 30 verschließt den Sockel 29 und enthält gemäß Fig. 4 in seinem Inneren den Schaltungsträger 21, der in einer durch die Längs- und Querrichtung entsprechend den Pfeilen 64, 65 aufgespannten und parallel zur Achse 8 des Betätigungsorgans 7 verlaufenden Ebene angeordnet ist.

Im Sockel 29 befindet sich eine Führung 59 für den Schlitten 9, die beispielsweise in der Art einer Nut-und Federverbindung, wie in Fig. 3 gezeigt ist, eines Schwalbenschwanzes o. dgl. ausgebildet sein kann, so daß der Schlitten 9 im Sockel 29 niedergehalten ist. Die Führung 59 stellt gleichzeitig eine Montagehilfe dar, da durch die Führung 59 ein Herausfallen des Schlittens 9 und der Achse 8 aus dem Sockel 29 bei der Montage verhindert ist. Weiter ist durch die Führung 59 auch die Bewegbarkeit des Schlittens 9 verbessert, da nicht wie bisher die Führung durch Anlage am Deckel 30 erfolgt. Selbstverständlich kann auch umgekehrt die Führung 59 mitsamt dem Schlitten 9 und der Achse 8 sowie gegebenenfalls weiteren elektrischen Komponenten anstelle im Sockel 29 im Deckel 30 angeordnet sein.

Entsprechend der Fig. 2 ist an der Außenseite des Sockels 29 oder des Deckels 30 wenigstens eine, in Längsrichtung gemäß dem Pfeil 64 und parallel zur Achse 8 des Betätigungsorgans 7 verlaufende Führungsfläche 60 für das Betätigungsorgan 7 befindlich. Vorzugsweise sind zwei derartige Führungsflächen 60, 60' in Querrichtung gemäß dem Pfeil 65 einander gegenüberliegend angeordnet. Das Betätigungsorgan 7 übergreift diese Führungsflächen 60, 60', so daß bei der Bewegung des Betätigungsorgans 7 diese Führungsflächen 60, 60' in das Innere des Betätigungsorgans 7 eintauchen. Das trägt mit dazu bei, daß in Längsrichtung gemäß dem Pfeil 64 die Ausdehnung des Schalters 1 weiter verringert wird.

Um die Größe des Gehäuses 2 in der auf die Längs- und Querrichtung entsprechend den Pfeilen 64, 65 senkrecht stehenden Tiefenrichtung gemäß dem Pfeil 69 (siehe Fig. 3) zu verringern, ist bevorzugterweise der Leistungshalbleiter 22 ungehäust, direkt auf dem Schaltungsträger 21 befindlich, wie in Fig. 4 näher zu sehen ist. Zur Befestigung kann der Leistunghalbleiter 22 auf dem Schaltungsträger 21 verlötet sein. Der Leistungshalbleiter 22 und die Bestückungsseite für die elektrischen Bauteile 70 des Schaltungsträgers 21 sind den Schaltkontakten 14, 15 zugewandt. Mit seiner der Bestückungsseite gegenüberliegenden Seite liegt der Schaltungsträger 21 direkt an einer Wand 51 im Gehäuseinneren 16 und zwar im Deckel 30 an, wie insbesondere aus Fig. 3 hervorgeht. Falls es aufgrund der Verlustleistung im Leistungshalbleiter 22 notwendig ist, kann der Schaltungsträger 21 auch über einen Kühlkörper, wie einer Kupferplatte o. dgl., an der Wand 51 anliegen.

Wie anhand von Fig. 2 und 4 ersichtlich, besteht die Aufnahme 28 für den Entstörkondensator 27 aus zwei Hälften, die in einer durch die Längs- und Querrichtung entsprechend den Pfeilen 64 und 65 aufgespannten, in Fig. 3 ebenfalls ungefähr entlang der Schnittlinie 4-4 verlaufenden Trennebene geteilt sind. Die beiden Hälften sind zweckmäßigerweise einstückig mit dem Sockel 29 und dem Deckel 30 ausgebildet. In der Aufnahme 28 befindet sich eine in Querrichtung gemäß dem Pfeil 65 verlaufende Freisparung 31 zur Außenseite des Gehäuses 2, durch die ein Erdungsanschluß 32 bzw. Potentialmitten-Anschluß des Entstörkondensators 27 hindurchragen kann.

In Querrichtung gemäß dem Pfeil 65 kann sich am Gehäuse 2 an der Aufnahme 28 für den Entstörkondensator 27 eine Zugentlastung 33 anschließen, wie in Fig. 2 zu sehen ist. Die Zugentlastung 33 nimmt das Netzkabel des Elektrowerkzeugs auf, das zu den Eingangsanschlüssen 3, 4 führt. Falls keine Aufnahme 28 für einen Entstörkondensator 27 angeordnet ist, kann sich die Zugentlastung 33 auch direkt an das Gehäuse 2 an der Seite anschließen, an der sich die Eingangsanschlüsse 3, 4 befinden. Die Zugentlastung 33 besteht aus einer Kabelaufnahme 34 mit einem abstehenden Steg 35 und einer in den Steg 35 eingehängten Schelle 36. Die Schelle 36 ist mittels einer Schraube 37 an der Kabelaufnahme 34 befestigbar.

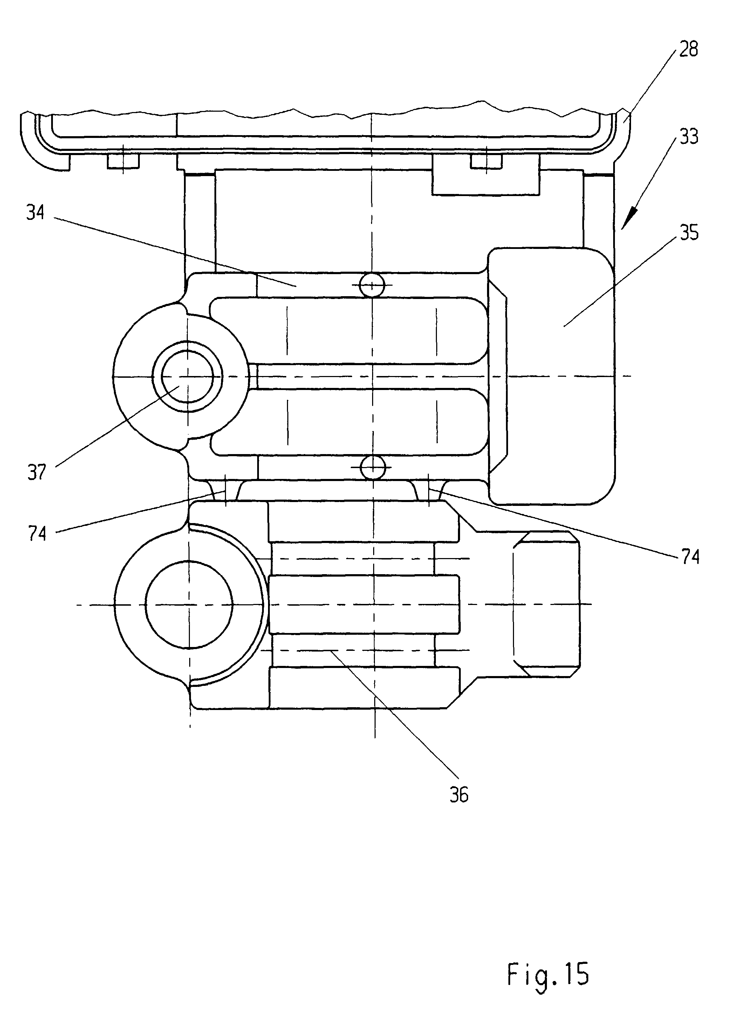

Die Schelle 36 kann zwei Oberflächen unterschiedlicher Krümmung aufweisen, wobei auch eine Oberfläche gerade ausgebildet sein kann. Durch Drehung der Schelle 36 um 180 Grad können Netzkabel unterschiedlichen Duchmessers in der Zugentlastung 33 aufgenommen werden. Die Schelle 36 ist somit symmetrisch im Bereich der Schraube 37 und des abstehendes Stegs 35 sowie asymmetrisch im Klemmbereich für das Netzkabel ausgebildet. Auch die Einhängung der Schelle 36 in den Steg 35 an sich ergibt ein gewisses Spiel, das die Aufnahme von Netzkabel mit unterschiedlichem Durchmesser unterstützt. Die Kabelaufnahme 34 und der Steg 35 sind zweckmäßigerweise einstückig am Gehäuse 2, vorzugsweise in den Sockel 29 integriert. Die Zugentlastung 33 besteht zweckmäßigerweise aus demselben Kunststoff wie das Gehäuse 2, beispielsweise aus glasfaserverstärktem Polyamid. Bei der Herstellung des Sockels 29 kann die Schelle 36 dann mit einer Sollbruchstelle 74 an einer Seite der Kabelaufnahme 34 angespritzt werden, wie in Fig. 15 gezeigt ist, so daß bei Montage des Schalters 1 im Elektrowerkzeug die Schelle 36 abgebrochen und nach Anbringen des Netzkabels am Schalter 1 zur Komplettierung der Zugentlastung 33 in den Steg 35 eingehängt sowie an der Kabelaufnahme 34 befestigt werden kann.

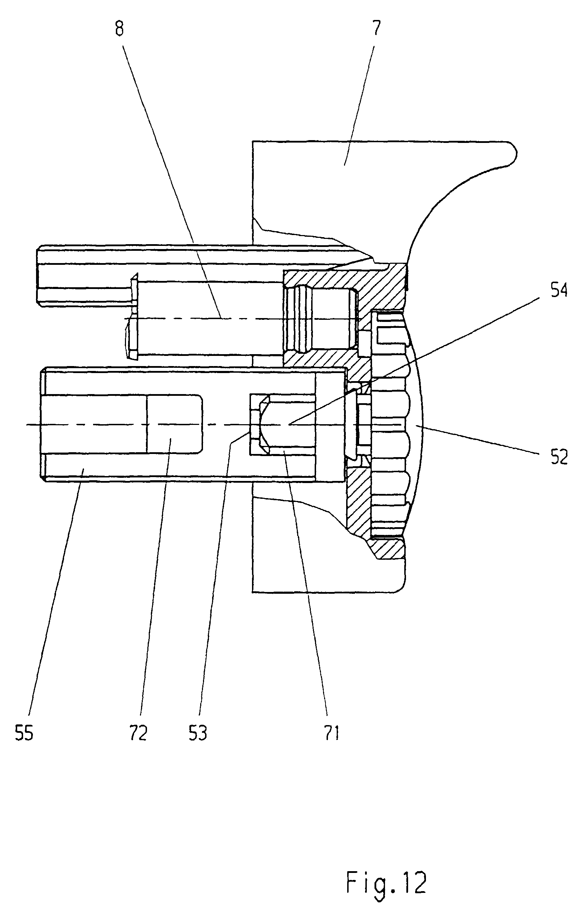

Am Schalter 1 kann ein Stellrad 52 mit einer im Betätigungsorgan 7 drehbar gelagerten Achse 54 vorgesehen sein, wie in Fig. 2 gezeigt ist, mit dessen Hilfe eine einstellbare Drehzahlbegrenzung unterhalb der maximal möglichen Drehzahl des Elektromotors 61 ermöglicht ist. Wie weiter aus Fig. 12 hervorgeht, ist am Betätigungsorgan 7 ein Arretierschieber 55 gehalten, der an der Außenseite des Gehäuses 2 geführt ist und durch Drehung des Stellknopfes 52 über ein Gewinde 71 in Längsrichtung gemäß dem Pfeil 64 (siehe Fig. 2) verstellbar ist. Am Arretierschieber 55 befindet sich an der dem Stellrad 52 zugeordneten Seite ein Anschlag 53, der mit dem Gehäuse 2 zusammenwirkt. Bei Verstellung des Arretierschiebers 55 wird der Anschlag 53 ebenfalls verstellt und somit der Bewegungsweg des Betätigungsorgans 7 auf einen kleineren als den maximal möglichen Verstellweg begrenzt, womit die durch das Betätigungsorgan 7 einstellbare Drehzahl dementsprechend begrenzt ist.

Das Betätigungsorgan 7 ist beim größten Verstellweg entsprechend der eingestellten Drehzahlbegrenzung feststellbar, indem ein Arretierknopf 56 mit dem Arretierschieber 55 zusammenwirkt, wie näher aus Fig. 5 hervorgeht. Der Arretierknopf 56 ist in einem an der Außenseite des Gehäuses 2 befindlichen Dom 57 gelagert. Im Dom 57 befindet sich wiederum eine in den Arretierknopf 56 eintauchende Feder 58, gegen die der Arretierknopf 56 derart beweglich ist, daß der Arretierknopf 56 voll im Dom 57 versenkbar ist. Zur Arretierung greift der versenkte Arretierknopf 56 in eine Ausnehmung 72, die in Fig. 12 zu sehen ist, in den Arretierschieber 55 ein. Durch die in den Arretierknopf 56 eintauchende Feder 58 kann der Dom 57 für den Arretierknopf 56 sehr flach gehalten werden.

Das Stellrad 52 ist derart angeordnet, daß dessen Achse 54 in Querrichtung gemäß dem Pfeil 65 versetzt zur Achse 8 des Betätigungsorgans 7 ist, wie insbesondere aus Fig. 2 ersichtlich ist. Der Arretierschieber 55 ist ebenfalls in Querrichtung gemäß dem Pfeil 65 und gegebenenfalls in Tiefenrichtung gemäß dem Pfeil 69 (siehe Fig. 3) versetzt zur Achse 8 des Betätigungsorgans 7 angeordnet, wie aus den Fig. 2 und 5 hervorgeht. Bei herkömmlichen Elektrowerkzeugschaltern mit seitlich am Gehäuse angeordneter Arretierung liegen das Stellrad und der Arretierschieber koaxial zur Achse des Betätigungsorgans. Im Gegensatz zu bisherigen Elektrowerkzeugschaltern ist damit sowohl das Stellrad 52 als auch der Arretierschieber 55 versetzt zur Achse 8 des Betätigungsorgans 7 angeordnet, wobei der Arretierschieber 55 um ca. 90 Grad gedreht und abgewinkelt zur Achse 8 verläuft, so daß im gewissen Sinn eine Asymmetrie zwischen dem Stellrad 52 und dem Betätigungsorgan 7 auftritt. Diese asymmetrische Anordnung von Stellrad 52 und Arretierschieber 55 sowie der flache Dom 57 mit voll versenkbarem Arretierknopf 56 tragen dazu bei, den Schalter 1 sehr schlank auszubilden.

Der erfindungsgemäße elektrische Schalter 1 ist, wie bereits erwähnt, im besonderen geeignet zur Anordnung in einem schlanken, ergonomisch ausgebildeten Handgriff eines Elektrowerkzeugs. Im folgenden sollen noch Angaben zur bevorzugten Dimensionierung für das Gehäuse 2 eines solchen Elektrowerkzeugschalters gemacht werden, wobei entsprechend Fig. 2 das Gehäuse 2 eine in Längsrichtung gemäß dem Pfeil 64 verlaufende Länge 1, eine in Querrichtung gemäß dem Pfeil 65 verlaufende Breite b und eine entsprechend Fig. 3 in Tiefenrichtung gemäß dem Pfeil 69 verlaufende Tiefe t besitzt.

Die Länge 1 des Gehäuseinneren 16 entspricht ungefähr der Länge des Schaltkontakts 14, 15. Die Breite b des Gehäuseinneren 16 entspricht im wesentlichen der Summe der Höhen der beiden Kontaktsysteme 10, 11 sowie des Durchmessers der Achse 8 des Betätigungsorgans 7 oder gegebenenfalls der Höhe des Schlittens 9 sowie gegebenenfalls der Höhe des Eingangsanschlusses 3, 4. Falls der Ausgangsanschluss 5, 6 im Gehäuseinneren 16 befindlich ist, kann dessen Höhe noch hinzukommen. Die Tiefe t des Gehäuseinneren 16 ist geringfügig größer als die Breite des Schaltkontakts 14, 15 zuzüglich der Breite von gegebenenfalls im Gehäuseinneren 16 enthaltenen zusätzlichen elektrischen Komponenten, wie des Schleifers 49 für die Potentiometerbahn 50 und des Schaltungsträgers 21. Vorzugsweise beträgt die Tiefe t ungefähr bis zur dreifachen Breite des Schaltkontakts 14, 15. Zur Länge 1, Breite b und Tiefe t des Gehäuses 2 kommen dann noch die jeweiligen Wandstärken für das Gehäuse 2 hinzu.

Bei einer konkreten Ausführung eines derartigen Schalters 1 kann die Länge 1 des Gehäuseinneren 16 zwischen 18 und 25 mm, insbesondere ca. 21 mm betragen. Die Breite b des Gehäuseinneren 16 kann zwischen 30 und 40 mm, insbesondere ca. 33 mm betragen. Die Tiefe t des Gehäuseinneren 16 wiederum wird zwischen 10 und 20 mm, insbesondere ca. 13 mm gewählt. Die Wandstärken für das Gehäuse 2 betragen zwischen 0,5 und 4 mm. Weiter hat die gegebenenfalls am Gehäuse 2 befindliche Aufnahme 28 für den Entstörkondensator 27 eine Länge 1 zwischen 20 und 35 mm, insbesondere ca. 27 mm sowie eine Breite b zwischen 15 und 30 mm, insbesondere ca. 24 mm. Die gegebenenfalls noch am Gehäuse 2 angeordnete Zugentlastung 33 besitzt eine Länge 1 zwischen 20 und 30 mm, insbesondere ca. 24 mm, sowie eine Breite b zwischen 10 und 20 mm, insbesondere ca. 15 mm. Die Tiefen t für die Aufnahme 28 und die Zugentlastung 33 können nach Bedarf etwas geringer als für das übrige Gehäuse 2 gewählt werden.

Die Erfindung ist nicht auf die beschriebenen und dargestellten Ausführungsbeispiele beschränkt. Sie umfaßt vielmehr auch alle fachmännischen Weiterbildungen im Rahmen des Erfindungsgedankens. So kann ein derartiger Schalter nicht nur an einem mit der Netzwechselspannung betriebenen Elektrowerkzeug sondern auch an einem mit Gleichspannung betriebenen Akkuelektrowerkzeug eingesetzt werden. In diesem Fall wird als Leistungshalbleiter ein FET, MOS-FET o. dgl. verwendet. Weiter kann ein derartiger Schalter auch in sonstigen, von einer Spannungsquelle versorgten elektrischen Geräten, wie Gartengeräte, Küchengeräte o. dgl., Verwendung finden.

### Bezugszeichen-Liste:

- 1,1':: elektrischer Schalter
- 2:: Gehäuse
- 3,4:: Eingangsanschluß
- 5,6:: Ausgangsanschluß
- 5':: Ausgangsanschluß (weitere Ausführung)
- 7:: Betätigungsorgan
- 8:: Achse
- 9:: Schlitten
- 10,11:: Kontaktsystem
- 12,13:: Festkontakt
- 14,15:: Schaltkontakt
- 16:: Gehäuseinneres
- 17:: elektrisches Verbindungsteil
- 18:: Stromführungsschiene
- 19,20:: Drehlager (für Schaltkontakt)
- 21:: Schaltungsträger
- 22:: Leistungshalbleiter
- 23,24:: elektrische Verbindung (zur Steuerelektronik)
- 25,26:: Anschluß (für Entstörkondensator)
- 27:: Entstörkondensator
- 28:: Aufnahme (für Entstörkondensator)
- 29:: Sockel
- 30:: Deckel
- 31:: Freisparung (für Erdungsanschluß)
- 32:: Erdungsanschluß
- 33:: Zugentlastung
- 34:: Kabelaufnahme
- 35:: Steg
- 36:: Schelle
- 37:: Schraube
- 38:: Aufnahme (im Eingangsanschluß)
- 39:: Schraubanschluß
- 40:: U-förmiges Anschlußteil
- 41:: Federschenkel
- 42:: Anschlußfahne
- 43:: Druckfeder
- 44:: Nocken
- 45:: Kontaktfeder
- 46:: Kontaktfläche (an Schaltungsträger)
- 47:: Ansatz
- 48:: U-förmiges Teil (an Kontaktfeder)
- 49:: Schleifer
- 50:: Potentiometerbahn
- 51:: Wand (des Gehäuses)
- 52:: Stellrad
- 53:: Anschlag
- 54:: Achse (des Stellrades)
- 55:: Arretierschieber
- 56:: Arretierknopf
- 57:: Dom
- 58:: Feder (im Dom)
- 59:: Führung
- 60,60':: Führungsfläche
- 61:: Elektromotor
- 62:: Feldwicklung
- 63:: Steuerelektronik
- 64:: Pfeil (Längsrichtung)
- 65:: Pfeil (Querrichtung)
- 66:: Anschlußfahne (am ersten Ausgangsanschluß)
- 67:: Federschenkel
- 68:: Fenster
- 69:: Pfeil (Tiefenrichtung)
- 70:: elektrisches Bauteil (auf Schaltungsträger)
- 71:: Gewinde (an Stellrad)
- 72:: Ausnehmung (in Arretierschieber)
- 73:: Anschlußfahne (am ersten Ausgangsanschluß, weitere Ausführung)
- 74:: Sollbruchstelle (an Zugentlastung)

## Patentansprüche

1. Elektrischer Schalter für ein von einer Spannungsquelle versorgtes elektrisches Gerät, insbesondere für ein Elektrowerkzeug mit einem Elektromotor (61), mit einem Gehäuse (2), mit zwei am und/oder im Gehäuse (2) befindlichen Eingangsanschlüssen (3, 4) zum elektrischen Anschluß an die Spannungsquelle und zwei Ausgangsanschlüssen (5, 5', 6) zum elektrischen Anschluß an das elektrische Gerät, mit einem vorzugsweise als Drücker ausgebildeten, manuell bewegbaren Betätigungsorgan (7), und mit wenigstens einem Kontaktsystem (10), das aus einem Festkontakt (12) sowie einem als Kontaktwippe ausgebildeten Schaltkontakt (14) besteht, wobei die Kontaktwippe zwei Hebelarme und ein Drehlager (19) besitzt, wobei der mit dem Festkontakt (12) zusammenwirkende, erste Hebelarm durch eine Federkraft in Schließrichtung zum Festkontakt (12) belastet ist, wobei das Betätigungsorgan (7) bei seiner Bewegung derart auf den zweiten Hebelarm einwirkt, daß der erste Hebelarm zum Schließen der elektrischen Verbindung des Kontaktsystems (10) an den Festkontakt (12) anlegbar ist, wobei der Festkontakt (12) des Kontaktsystems (10) mit dem ersten Eingangsanschluß (3) in direkter elektrischer Verbindung steht, wobei der zweite Eingangsanschluß (4) ein im und/oder am Gehäuse (2) angeordnetes elektrisches Verbindungsteil (17) zum zweiten Ausgangsanschluß (6) besitzt, und wobei eine im Gehäuse (2) befindliche Stromführungsschiene (18) eine elektrische Verbindung zum ersten Ausgangsanschluß (5, 5') herstellt, dadurch gekennzeichnet, daß die Stromführungsschiene (18) in etwa im Bereich zwischen den beiden Eingangsanschlüssen (3, 4) beginnt und in etwa im Bereich des ersten, den Eingangsanschlüssen (3, 4) gegenüberliegenden Ausgangsanschlusses (5, 5') endet, daß die Stromführungsschiene (18) das Gehäuse (2) in Querrichtung (65) zur Bewegungsrichtung des Betätigungsorgans (7) durchsetzend angeordnet ist, daß die Stromführungsschiene (18) in Längsrichtung (64) zur Bewegungsrichtung des Betätigungsorgans (7) in etwa im mittleren Bereich des Gehäuses (2) verläuft, und daß das Drehlager (19) des Schaltkontakts (14) an der Stromführungsschiene (18) in der Nähe der Eingangsanschlüsse (3, 4) angeordnet ist.

2. Elektrischer Schalter nach Anspruch 1, dadurch gekennzeichnet, daß die elektrische Verbindung zwischen der Stromführungsschiene (18) und dem ersten Ausgangsanschluß (5, 5') mittels eines im Gehäuse (2) befindlichen, weiteren Kontaktsystems (11) über das Betätigungsorgan (7) schaltbar ist.

3. Elektrischer Schalter nach Anspruch 1 oder 2, dadurch gekennzeichnet, daß im Gehäuse (2) eine gegebenenfalls auf einem Schaltungsträger (21) befindliche Steuerelektronik (63) mit einem Leistungshalbleiter (22), wie einem Triac, FET o. dgl., zur Drehzahleinstellung des Elektromotors (61) angeordnet ist, daß eine elektrische Verbindung (23) von der Stromführungsschiene (18) zur Steuerelektronik (63) führt, daß vorzugsweise das weitere Kontaktsystem (11), das insbesondere zur Überbrückung der Steuerelektronik (63) dient, einen zweiten, als Kontaktwippe mit zwei Hebelarmen ausgebildeten Schaltkontakt (15) besitzt, dessen Drehlager (20) an der Stromführungsschiene (18) in der Nähe des ersten Ausgangsanschlusses (5, 5') befindlich ist, wobei insbesondere die beiden Schaltkontakte (14, 15) an der Stromführungsschiene (18) einander in Querrrichtung (65) gegenüberliegend angeordnet sind.

4. Elektrischer Schalter nach Anspruch 1, 2 oder 3, dadurch gekennzeichnet, daß am Beginn der Stromführungsschiene (18) eine zwischen den beiden Eingangsanschlüssen (3, 4) verlaufende Verlängerung als erster Anschluß (25) für einen Entstörkondensator (27), insbesondere einstückig angeformt ist, daß ein zweiter Anschluß (26) für den Entstörkondensator (27) vorzugsweise mit dem zweiten Eingangsanschluß (4) in elektrischer Verbindung steht, wobei die Anschlüsse (25, 26) für den Entstörkondensator (27) insbesondere in der Art eines Steckanschlusses ausgebildet sind, und daß gegebenenfalls an der dem Kontaktsystem (10) gegenüberliegenden Seite eine als erster Ausgangsanschluß (5') dienende Anschlußfahne (73), insbesondere einstückig am Ende der Stromführungsschiene (18) angeformt ist.

5. Elektrischer Schalter nach einem der Ansprüche 1-4, dadurch gekennzeichnet, daß der Festkontakt (12) des Kontaktsystems (10) einstückig mit dem ersten Eingangsanschluß (3) ausgebildet ist, daß vorzugsweise das elektrische Verbindungsteil (17) am zweiten Eingangsanschluß (4) aus einem U-förmigen, auf den zweiten Eingangsanschluß (4), insbesondere mittels Federschenkel (41), aufgesteckten Anschlußteil (40) besteht, daß das Anschlußteil (40) weiter vorzugsweise eine Anschlußfahne (42), die als zweiter Ausgangsanschluß (6) dient, besitzt, und daß am Anschlußteil (40) noch weiter vorzugsweise der zweite Anschluß (26) für den Entstörkondensator (27) angeformt ist, wobei insbesondere das Anschlußteil (40) mit der Anschlußfahne (42) und dem zweiten Anschluß (26) für den Entstörkondensator (27) einstückig ausgebildet ist.

6. Elektrischer Schalter nach einem der Ansprüche 1 bis 5, dadurch gekennzeichnet, daß der Festkontakt (13) für das weitere Kontaktsystem (11) mit einer Anschlußfahne (66), die als erster Ausgangsanschluß (5) dient, versehen ist, wobei insbesondere der Festkontakt (13) und die Anschlußfahne (66) einstückig ausgebildet sind, und daß vorzugsweise eine elektrische Verbindung (24) vom Festkontakt (13) des weiteren Kontaktsystems (11) zur Steuerelektronik (63) besteht.

7. Elektrischer Schalter nach einem der Ansprüche 1 bis 6, dadurch gekennzeichnet, daß die elektrische Verbindung (23, 24) von der Steuerelektronik (63) zur Stromführungsschiene (18) sowie zum Festkontakt (13) des weiteren Kontaktsystems (11) als Kontaktfeder (45), die insbesondere eine ungefähr herzförmige, seitlich offene Gestalt besitzt, ausgebildet ist, wobei vorzugsweise die Kontaktfeder (45) elastisch federnd an einer Kontaktfläche (46) auf dem Schaltungsträger (21) anliegt und wobei weiter vorzugsweise die Kontaktfeder (45) an einem Ansatz (47) am Festkontakt (13) des weiteren Kontaktsystems (11) oder der Stromführungsschiene (18), gegebenenfalls leicht drehbar befestigt ist, indem die Kontaktfeder (45) insbesondere mittels eines U-förmigen Teils (48) am Ansatz (47) aufgesteckt und beispielsweise unter Vorsehen eines gewissen Spiels mit dem Ansatz (47) verstemmt, verrastet o. dgl. ist.

8. Elektrischer Schalter nach einem der Ansprüche 1 bis 7, dadurch gekennzeichnet, daß der Eingangsanschluß (3, 4) als massives blockförmiges Teil mit einer Aufnahme (38), die gegebenenfalls einen Schraubanschluß (39) besitzt, für die Zuleitung zur Spannungsquelle ausgebildet ist, wobei insbesondere eine Fläche am ersten Eingangsanschluß (3) den Festkontakt (12) bildet, daß vorzugsweise die Eingangsanschlüsse (3, 4) sowie die Kontaktfedern (45) aus Metall mit guter elektrischer Leitfähigkeit bestehen, und daß weiter vorzugsweise die Stromführungsschiene (18), das Anschlußteil (40) sowie der Festkontakt (13), insbesondere als Stanzbiegeteil, aus Metall mit guter elektrischer Leitfähigkeit hergestellt sind, wobei insbesondere die Stromführungsschiene (18) und der erste Eingangsanschluß (3) aus Kupfer, der zweite Eingangsanschluß (4) sowie das Anschlußteil (40) aus Messing und die Kontaktfeder (45) zum Schaltungsträger (21) aus Bronze, Beryllium-Kupfer o. dgl. bestehen.

9. Elektrischer Schalter nach einem der Ansprüche 1 bis 8, dadurch gekennzeichnet, daß es sich bei der Spannungsquelle um die Netzwechselspannung handelt, so daß der Eingangsanschluß (3, 4) als Netzanschluß und der Ausgangsanschluß (5, 5', 6) als Feldanschluß für die Feldwicklung (62) des Elektromotors (61) dienen.

10. Elektrischer Schalter nach einem der Ansprüche 1 bis 9, dadurch gekennzeichnet, daß die auf den ersten Hebelarm des Schaltkontakts (14, 15) einwirkende Federkraft von einer Druckfeder (43) erzeugt ist, und daß vorzugsweise ein Nocken (44) an einer in das Gehäuse (2) führenden Achse (8) des Betätigungsorgans (7), gegebenenfalls an einem Schlitten (9) an der Achse (8), auf den zweiten Hebelarm derart einwirkt, daß sich der Schaltkontakt (14, 15) bei einem bestimmten Bewegungsweg des Betätigungsorgans (7) an den Festkontakt (12, 13) anlegt.

11. Elektrischer Schalter, wobei das Gehäuseinnere (16) des Gehäuses (2) eine in Längsrichtung (64) entsprechend der Bewegungsrichtung der Achse (8) des Betätigungsorgans (7) verlaufende Länge (1), eine in Querrichtung (65) zur Längsrichtung (64) und in der Ebene der Achse (8) des Betätigungsorgans (7) verlaufende Breite (b) und eine sowohl senkrecht zur Längsrichtung (64) als auch Querrichtung (65) verlaufende Tiefe (t) besitzt, nach einem der Ansprüche 1 bis 10, dadurch gekennzeichnet, daß die Länge (1) des Gehäuseinneren (16) der Länge des Schaltkontakts (14, 15) entspricht, daß die Tiefe (t) des Gehäuseinneren (16) größer als die in Richtung der Tiefe (t) verlaufende Breite des Schaltkontakts (14, 15) zuzüglich der Breite von im Gehäuseinneren (16) enthaltenen zusätzlichen elektrischen Komponenten bis zur dreifachen Breite des Schaltkontakts (14, 15) ist, und daß die Breite (b) des Gehäuseinneren (16) der Summe der Höhen der beiden Kontaktsysteme (10, 11), des Durchmessers der Achse (8) des Betätigungsorgans (7) oder der Höhe eines an der Achse (8) des Betätigungsorgans (7), im Gehäuseinneren (16) befindlichen, zur Einwirkung auf die Kontaktsysteme (10, 11) dienenden Schlittens (9) sowie, falls im Gehäuse (2) angeordnet, der Höhe des Eingangsanschlusses (3, 4) und/oder Ausgangsanschlusses (5, 6) entspricht.

12. Elektrischer Schalter nach einem der Ansprüche 1 bis 11, dadurch gekennzeichnet, daß zwei Kontaktsysteme (10, 11) auf einander gegenüberliegenden Seiten der Achse (8) des Betätigungsorgans (7) und im wesentlichen in Querrichtung (65) im Gehäuseinneren (16) angeordnet sind.

13. Elektrischer Schalter nach einem der Ansprüche 1 bis 12, dadurch gekennzeichnet, daß das Gehäuse (2) in einer durch die Längsrichtung (64) und Querrichtung (65) aufgespannten Ebene in einen Sockel (29) und einen Deckel (30) geteilt ist, wobei der Sockel (29) zur Aufnahme der Kontaktsysteme (10, 11) und einer als elektrischen Leitung dienenden Stromführungsschiene (18) sowie gegebenenfalls des Schlittens (9) oder der Achse (8) des Betätigungsorgans (7) ausgebildet ist, daß vorzugsweise eine Führung (59) und Niederhaltung für den Schlitten (9) im Sockel (29) oder im Deckel (30) angeordnet ist, und daß weiter vorzugsweise an der Außenseite des Sockels (29) oder des Deckels (30) wenigstens eine in Längsrichtung (64), parallel zur Achse (8) des Betätigungsorgans (7) verlaufende Führungsfläche (60, 60') befindlich ist, wobei das Betätigungsorgan (7) die Führungsfläche (60, 60') übergreift.

14. Elektrischer Schalter nach einem der Ansprüche 1 bis 13, dadurch gekennzeichnet, daß es sich beim Schaltungsträger (21) für die Steuerelektronik (63) um eine Leiterplatte, eine Keramikplatte o. dgl. handelt, daß vorzugsweise der Schaltungsträger (21) im Deckel (30) angeordnet ist, wobei der Schaltungsträger (21) insbesondere in einer durch die Längsrichtung (64) und Querrichtung (65) aufgespannten, parallel zur Achse (8) des Betätigungsorgans (7) verlaufenden Ebene derart angeordnet ist, daß ein am Schlitten (9) befindlicher Schleifer (49) in Kontakt mit einer Potentiometerbahn (50) auf dem Schaltungsträger (21) steht, daß weiter vorzugsweise der Leistungshalbleiter (22) ungehäust, direkt auf Schaltungsträger (21), beispielsweise mittels einer Lötverbindung befindlich ist, wobei der Leistungshalbleiter (22) und die Bestückungsseite des Schaltungsträgers (21) insbesondere den Schaltkontakten (14, 15) zugewandt sind, und daß noch weiter vorzugsweise der Schaltungsträger (21) direkt oder über einen Kühlkörper, wie einer Kupferplatte o. dgl., mit seiner der Bestückungsseite gegenüberliegenden Seite an einer Wand (51) im Gehäuseinneren (16), insbesondere im Deckel (30) angelegt ist.

15. Elektrischer Schalter nach einem der Ansprüche 1 bis 14, dadurch gekennzeichnet, daß am Betätigungsorgan (7) ein Stellrad (52) für die Verstellung eines mit dem Gehäuse (2) zusammenwirkenden Anschlags (53) zur Begrenzung des Bewegungsweges des Betätigungsorgans (7) derart angeordnet ist, daß die Achse (54) des Stellrads (52) in Querrichtung (65) versetzt zur Achse (8) des Betätigungsorgans (7) ist, daß vorzugsweise das Betätigungsorgan (7) mittels eines mit einem am Betätigungsorgan (7) gehaltenen und gegebenenfalls an der Außenseite des Gehäuses (2) geführten Arretierschieber (55) zusammenwirkenden Arretierknopfes (56) in bestimmten Bewegungsstellungen feststellbar ist, wobei der Arretierknopf (56) in einem an der Außenseite des Gehäuses (2) befindlichen Dom (57) derart gegen eine im Dom (57) befindliche, in den Arretierknopf (56) eintauchende Feder (58) beweglich ist, daß der Arretierknopf (56) voll im Dom (57) versenkbar ist, und daß weiter vorzugsweise der Arretierschieber (55), der insbesondere mittels des Stellrades (52) verstellbar ist und gegebenenfalls an der dem Stellrad (52) zugeordneten Seite den Anschlag (53) trägt, in Querrichtung (65) und gegebenenfalls in Tiefenrichtung (69) versetzt zur Achse (8) des Betätigungsorgans (7) angeordnet ist.

16. Elektrischer Schalter nach einem der Ansprüche 1 bis 15, dadurch gekennzeichnet, daß am Gehäuse (2) eine Aufnahme (28) für den Entstörkondensator (27) angeordnet ist, wobei die Aufnahme (28) sich in Querrichtung (65), insbesondere an der Seite, an der sich die Eingangsanschlüsse (3, 4) befinden, an das Gehäuse (2) derart anschließt, daß der Entstörkondensator (27) zugehörige Anschlüsse (25, 26) am zweiten Eingangsanschluß (4) und der Stromführungsschiene (18) kontaktiert, daß vorzugsweise die Aufnahme (28) aus zwei Teilen besteht, die insbesondere einstückig mit dem Sockel (29) und dem Deckel (30) ausgebildet sind, und daß weiter vorzugsweise eine Freisparung (31) in der Aufnahme (28) zur Außenseite des Gehäuses (2) für einen Erdungsanschluß (32) o. dgl. des Entstörkondensators (27) befindlich ist.

17. Elektrischer Schalter nach einem der Ansprüche 1 bis 16, dadurch gekennzeichnet, daß sich in Querrichtung (65) am Gehäuse (2) an der Seite, an der sich die Eingangsanschlüsse (3, 4) befinden, oder gegebenenfalls an der Aufnahme (28) für den Entstörkondensator (27) eine Zugentlastung (33) für ein Kabel, insbesondere für ein Netzkabel des Elektrowerkzeugs, zu den Eingangsanschlüssen (3, 4) anschließt, wobei insbesondere die Zugentlastung (33) einstückig in den Sockel (29) des Gehäuses (2) integriert ist, wobei die Zugentlastung (33) vorzugsweise aus einer Kabelaufnahme (34) mit einem abstehenden Steg (35) und einer in den Steg (35) eingehängten, mit der Kabbelaufnahme (34) verschraubbaren Schelle (36) besteht, wobei weiter vorzugsweise die insbesondere aus demselben Kunststoff wie das Gehäuse (2) bestehende Schelle (36) zwei Oberflächen mit unterschiedlicher Krümmung besitzt, so daß Kabel von verschiedenen Durchmessern in der Zugentlastung (33) durch Drehung der Schelle (36) aufnehmbar sind, und wobei noch weiter vorzugsweise die Schelle (36) mit einer Sollbruchstelle (74) an eine Seite der Kabelaufnahme (34) derart angespritzt ist, daß die Schelle (36) bei Montage des Kabels abgebrochen und zur Komplettierung der Zugentlastung (33) in den Steg (35) eingehängt werden kann.

18. Elektrischer Schalter nach einem der vorhergehenden Ansprüche, insbesondere zur Anordnung in einem schlanken Handgriff eines Elektrowerkzeugs, dadurch gekennzeichnet, daß die Länge (1) des Gehäuseinneren (16) zwischen 18 und 25 mm, insbesondere ca. 21 mm, die Breite (b) des Gehäuseinneren (16) zwischen 30 und 40 mm, insbesondere ca. 33 mm, und die Tiefe (t) des Gehäuseinneren (16) zwischen 10 und 20 mm, insbesondere ca. 13 mm, betragen, daß die gegebenenfalls am Gehäuse (2) befindliche Aufnahme (28) für den Entstörkondensator (27) eine Länge zwischen 20 und 35 mm, insbesondere ca. 27 mm sowie eine Breite zwischen 15 und 30 mm, insbesondere ca. 24 mm besitzt und daß die gegebenenfalls am Gehäuse (2) angeordnete Zugentlastung (33) eine Länge zwischen 20 und 30 mm, insbesondere ca. 24 mm, sowie eine Breite zwischen 10 und 20 mm, insbesondere ca. 15 mm besitzt.

## Claims

1. Electrical switch for an electrical device fed by a power supply unit, in particular for a power tool with an electric motor (61), comprising housing (2), two input connections (3, 4) on and/or in the housing (2) for electrical connection to the power supply unit, and two output connections (5, 5', 6) for electrical connection to the electrical device, a manually operable actuating element (7) designed preferably as a trigger, and at least one contact system (10) comprising a stationary contact (12) and a switching contact (14) designed as a contact rocker, wherein the contact rocker has two lever arms and a rotary bearing (19), the first lever arm interacting with the stationary contact (12) being loaded by an elastic force in the closing direction of the stationary contact (12), whereby the actuating element (7) in its movement acts upon the second lever arm, such that the first lever arm can be applied to the stationary contact (12) to close the electrical connection of the contact system (10), whereby the stationary contact (12) of the contact system (10) is in direct electrical connection with the first input connection (3), whereby the second input connection (4) has an electrical connecting element (17) arranged in and/or on the housing (2) to the second output connection (6), and whereby a current-carrying bar (18) located in the housing (2) produces an electrical connection to the first output connection (5, 5'), characterised in that the current-carrying bar (18) begins in the region between the two input connections (3, 4) and ends in the region of the first output connection (5, 5') opposite the input connections (3, 4), in that the current-carrying bar (18) is arranged passing through the housing (2) in transverse direction (65) to the direction of movement of the actuating element (7), in that the current-carrying bar (18) runs in longitudinal direction (64) to the direction of movement of the actuating element (7) approximately in the middle region of the housing (2), and in that the rotary bearing (19) of the switching contact (14) is arranged on the current-carrying bar (18) in the vicinity of the input connections (3,4).

2. Electrical switch according to claim 1, characterised in that the electrical connection between the current-carrying bar (18) and the first output connection (5, 5') is switchable by means of an additional contact system (11) located in the housing (2) via the actuating element (7).

3. Electrical switch according to claim 1 or 2, characterised in that in the housing (2) control electronics (63) are arranged positioned if necessary on a circuit bearer (21) with a power semiconductor (22), such as a TRIAC, FET or the like, for adjusting the speed of the electric motor (61), in that an electrical connection (23) leads from the current-carrying bar (18) to the control electronics (63), in that preferably the additional contact system (11), which is used in particular for bridging the control electronics (63), has a second switching contact (15) designed as a contact rocker with two lever arms, the rotary bearing (20) of which is located on the current-carrying bar (18) in the vicinity of the first output connection (5,5'), whereby in particular the two switching contacts (14, 15) are arranged on the current-carrying bar (18) opposite one another in transverse direction (65).

4. Electrical switch according to claim 1, 2 or 3, characterised in that at the beginning of the current-carrying bar (18) an extension is formed in one piece running between the two input connections (3, 4) as a first connection (25) for an anti-interference capacitor (27), in that a second connection (26) for the anti-interference capacitor (27) is preferably in electrical connection with the second input connection (4), whereby the connections (25, 26) for the anti-interference capacitor (27) are designed in particular as plug connections, and in that if necessary on the side opposite the contact system (10) a connection lug (73) acting as a first output connection (5') is formed, in particular in one piece with the end of the current-carrying bar (18).

5. Electrical switch according to one of claims 1-4, characterised in that the stationary contact (12) of the contact system (10) is designed in one piece with the first input connection (3), in that preferably the electrical connecting element (17) on the second input connection (4) comprises a U-shaped connecting element (40) fitted onto the second input connection (4), in particular by means of spring arms (41), in that the connecting element (40) also preferably has a connection lug (42) which acts as a second output connection (6), and in that on the connection part (40) preferably the second connection (26) for the anti-interference capacitor (27) is formed, whereby in particular the connecting element (40) is designed in one piece with the connection lug (42) and the second connection (26) for the anti-interference capacitor (27).

6. Electrical switch according to one of claims 1 to 5, characterised in that the stationary contact (13) for the additional contact system (11) is provided with a connection lug (66), which serves as a first output connection (5), whereby in particular the stationary contact (13) and the connection lug (66) are designed in one piece, and in that preferably an electrical connection (24) exists from the stationary contact (13) of the additional contact system (11) to the control electronics (63).

7. Electric switch according to one of claims 1 to 6, characterised in that the electrical connection (23, 24) from the control electronics (63) to the current-carrying bar (18) and to the stationary contact (13) of the additional contact system (11) is designed as a contact spring (45), which in particular has an approximately heart-shaped design open at the side, whereby preferably the contact spring (45) bears elastically on a contact surface (46) on the circuit bearer (21), and whereby also preferably the contact spring (45) is secured, if necessary slightly rotatably, onto a projection (47) on the stationary contact (13) of the additional contact system (11) or the current-carrying bar (18), in that the contact spring (45) is fitted onto the projection (47), in particular by means of a U-shaped part (48) and for example is caulked, locked or the like to the projection (47) with the provision of a certain amount of play.

8. Electrical switch according to one of claims 1 to 7, characterised in that the input connection (3, 4) is designed as a solid block-shaped element with a mount (38) if necessary with a screw connection (39) for feeding to the power supply, whereby in particular a surface on the first input connection (3) forms the stationary contact (12), in that preferably the input connections (3, 4) and the contact springs (45) are made of metal with good electrical conductivity, and in that also preferably the current-carrying bar (18), the connection element (40) and the stationary contact (13) are made, in particular as a stamped and bent element of metal with good electrical conductivity, whereby in particular the current-carrying bar (18) and the first input connection (3) are made of copper, the second input connection (4) and the connecting element (40) are made of brass and the contact springs (45) to the circuit bearer (21) are made of bronze, beryllium-copper or the like.

9. Electrical switch according to one of claims 1 to 8, characterised in that the power supply is a mains alternating current, so that the input connection (3, 4) is a mains connection and the output connection (5, 5', 6) is a field connection for the field winding (62) of the electric motor (61).

10. Electrical switch according to one of claims 1 to 9, characterised in that the spring force acting on the first lever arm of the switching contact (14, 15) is produced by a compression spring (43), and in that preferably a cam (44) on an axis (8) leading into the housing (2) of the actuating element (7), if necessary on a slide (9) on the axis (8), acts on the second lever arm, so that the switching contact (14, 15) is applied with a specific movement of the actuating element (7) onto the stationary contact (12, 13).

11. Electrical switch, wherein the inside (16) of the housing (2) has a length (I) running in longitudinal direction (64) according to the direction of movement of the axis (8) of the actuating element (7), a width (b) running in transverse direction (65) to the longitudinal direction (64) and in the plane of the axis (8) of the actuating element (7), and a depth (t) running both perpendicular to the longitudinal direction (4) and transverse direction (65) according to one of claims 1 to 10, characterised in that the length (I) of the inside of the housing (16) corresponds to the length of the switching contact (14, 15), in that the depth (t) of the inside of the housing (16) is greater than the width of the switching contact (14, 15) running in the direction of the depth (t) in addition to the width of additional electrical components contained in the inside of the housing (16) up to three times the width of the switching contact (14, 15), and in that the width (b) of the inside of the housing (16) corresponds to the sum of the heights of the two contact systems (10, 11), the diameter of the axis (8) of the actuating element (7) or the height of a slide (9) located on the axis (8) of the actuating element (7) inside the housing (16) that acts on the contact systems (10, 11), and if arranged in the housing (2) corresponds to the height of the input connection (3, 4) and/or output connection (5, 6).

12. Electrical switch according to one of claims 1 to 11, characterised in that two contact systems (10, 11) are arranged on opposite sides of the axis (8) of the actuating element (7) and essentially in transverse direction (65) on the inside of the housing (16).

13. Electrical housing according to one of claims 1 to 12, characterised in that the housing (2) in a plane extending through the longitudinal direction (64) and transverse direction (65) is divided into a base (29) and a lid (30), whereby the base (29) is designed to mount the contact systems (10, 11) and a current-carrying bar (18) serving as an electrical line and if necessary the slide (9) and or the axis (8) of the actuating element (7), in that preferably a guide (59) and holding down device for the slide (9) arranged in the base (29) or in the lid (30), and in that furthermore preferably on the outside of the base (29) or the lid (30) there is at least one guide surface (60, 60') running in longitudinal direction (64) parallel to the axis (8) of the actuating element (7), whereby the actuating element (7) overgrips the guide surface (60, 60').

14. Electrical switch according to one of claims 1 to 13, characterised in that the circuit bearer (21) for the control electronics (63) is a circuit board, a ceramic board or the like, in that preferably the circuit bearer (21) is arranged in the lid (30), whereby the circuit bearer (21) is arranged in particular in a plane through the longitudinal direction (64) and transverse direction (65) running parallel to the axis (8) of the actuating element (7), in that a potentiometer arm (49) located on the slide (9) is in contact with a potentiometer track (50) on the circuit bearer (21) in that also preferably the power semiconductor (22) is positioned unhoused directly on the circuit bearer (21), for example by means of a soldered joint, whereby the power semiconductor (22) and the application side of the circuit bearer (21) face in particular the switching contacts (14, 15) and in that in addition preferably the switching bearer (21) is fitted directly or via a cooling body such as a copper board or the like with its side opposite the fitting side on a wall (51) on the inside of the housing (16), in particular in the lid (30).

15. Electrical switch according to one of claims 1 to 14, characterised in that on the activating element (7) an adjusting wheel (52) for adjusting a stop (53) interacting in the housing (2) for delimiting the movement of the actuating element (7) is arranged, so that the axis (54) of the adjusting wheel (52) in transverse direction (65) is offset to the axis (8) of the actuating element (7), in that preferably the actuating element (7) can be secured in specific movement positions by means of a locking button (56) interacting with a locking slide (55) on the actuating element (7) and guided if necessary on the outside of the housing (2), whereby the locking button (56) is moveable in a housing (57) located on the outside of the housing (2) against a spring (58) located in the housing (57) entering in the locking button (56), in that the locking button (56) can be completely lowered into the housing (57), and in that preferably the locking slide (55), which is adjustable in particular by means of the adjusting wheel (52) and if necessary on the side allocated to the adjusting wheel (52) bears the stop (53), is arranged in transverse direction (65) and is offset if necessary in depth direction (69) to the axis (8) of the actuating element (7).

16. Electrical switch according to one of claims 1 to 15, characterised in that on the housing (2) a mount (28) for the anti-interference capacitor (27) is arranged, whereby the mount (28) is connected to the housing (2) in transverse direction (65), in particular on the side, on which the input connections (3, 4) are located, in that the anti-interference capacitor (27) contacts respective connections (25, 26) on the second input connection (4) and the current-carrying bar (18), in that preferably the mount (28) consists of two parts, which are designed in particular to be integral with the base (29) and the lid (30), and in that also preferably there is a free recess (31) in the mount (28) towards the outside of the housing (2) for an earth connection (32) or the like of the anti-interference capacitor (27).

17. Electrical switch according to one of claims 1 to 16, characterised in that a tension-relief device (33) for a cable, in particular a mains cable of the power tool to the input connections (3, 4) is connected in transverse direction (65) on the housing (2) on the side on which the input connections (3, 4) are located or if necessary on the mount (28) for the anti-interference capacitor (27), whereby in particular the tension-relief device (33) is integrated in one piece into the base (29) of the housing (2), whereby the tension-relief device (33) preferably comprises a cable mount (34) with a projecting web (35) and a clip (36) suspended in the web (35) that can be screwed to the cable mount (34), whereby also preferably the clip (36) made in particular of the same plastic as the housing (2) has two surfaces of different curvature, so that cables of differing diameters can be mounted in the tension-relief device (33) by rotating the clip (36), and whereby furthermore preferably the clip (36) is provided with a predetermined breaking point (74) on one side of the cable mount (34), so that the clip (36) on assembly of the cable can be broken and can be suspended to complete the tension-relief device (33) in the web (35).

18. Electrical switch according to one of the preceding claims, in particular for arrangement in a slim handle of a power tool, characterised in that the length (I) of the inside of the housing (16) is between 18 and 25 mm, in particular about 21 mm, the width (b) of the inside of the housing (16) is between 30 and 40 mm, in particular about 33 mm, and the depth (t) of the inside of the housing (16) is between 10 and 20 mm, in particular about 13 mm, in that the mount (28) located if necessary on the housing (2) for the anti-interference capacitor (27) has a length of between 20 and 35 mm, in particular 27 mm and a width of between 15 and 30 mm, in particular about 24 mm, and in that the tension-relief device (33) arranged if necessary on the housing (2) has a length of between 20 and 30 mm, in particular about 24 mm and a width of between 10 and 20 mm, in particular about 15 mm.

## Revendications

1. Commutateur électrique pour un appareil électrique alimenté par une source de tension, en particulier pour un outil électrique ayant un moteur électrique (61), comportant un boîtier (2), deux raccords d'entrée (3, 4) se trouvant sur et/ou dans le boîtier (2) pour le raccordement électrique à la source de tension et deux raccords de sortie (5, 5', 6) pour le raccordement électrique à l'appareil électrique, un organe d'actionnement (7), pouvant être déplacé manuellement, réalisé avantageusement comme poussoir, et au moins un système de contacts (10), qui est constitué d'un contact fixe (12) ainsi que d'un contact de commutation (14) réalisé comme bascule de contact, la bascule de contact possédant deux bras de levier et un palier tournant (19), le premier bras de levier, coopérant avec le contact fixe (12), étant chargé par une force élastique dans la direction de fermeture vers le contact fixe (12), l'organe d'actionnement (7) agissant, lors de son déplacement, sur le second bras de levier de sorte que le premier bras de levier peut être appliqué contre le contact fixe (12) pour fermer la liaison électrique du système de contacts (10), le contact fixe (12) du système de contacts (10) étant en liaison électrique directe avec le premier raccord d'entrée (3), le second raccord d'entrée (4) possédant une partie de liaison électrique (17) agencée dans et/ou sur le boîtier (2), vers le second raccord de sortie (6), et un rail de guidage de courant (18) se trouvant dans le boîtier (2) permettant une liaison électrique vers le premier raccord de sortie (5, 5'),
caractérisé en ce que le rail de guidage de courant (18) commence sensiblement dans la zone entre les deux raccords d'entrée (3, 4) et s'achève sensiblement dans la zone du premier raccord de sortie (5, 5') opposé aux raccords d'entrée (3, 4), en ce que le rail de guidage de courant (18) est agencé en traversant le boîtier (2) en direction transversale (65) par rapport à la direction de déplacement de l'organe d'actionnement (7), en ce que le rail de guidage de courant (18) s'étend dans la direction longitudinale (64) par rapport à la direction de déplacement de l'organe d'actionnement (7) sensiblement dans la zone médiane du boîtier (2), et en ce que le palier tournant (19) du contact de commutation (14) est agencé sur le rail de guidage de courant (18) à proximité des raccords d'entrée (3, 4).

2. Commutateur électrique selon la revendication 1,
caractérisé en ce que la liaison électrique entre le rail de guidage de courant (18) et le premier raccord de sortie (5, 5') peut être commutée au moyen d'un autre système de contacts (11) se trouvant dans le boîtier (2), par l'intermédiaire de l'organe d'actionnement (7).

3. Commutateur électrique selon la revendication 1 ou 2,
caractérisé en ce que, dans le boîtier (2), il est agencé une électronique de commande (63) se trouvant le cas échéant sur un support de circuit (21), ayant un semi-conducteur de puissance (22), comme un triac, un FET (transistor à effet de champ) ou analogue, pour le réglage de la vitesse de rotation du moteur électrique (61), en ce qu'une liaison électrique (23) mène du rail de guidage de courant (18) à l'électronique de commande (63), en ce qu'avantageusement l'autre système de contacts (11), qui sert en particulier à ponter l'électronique de commande (63), possède un second contact de commutation (15) réalisé comme bascule de contact ayant deux bras de levier, dont le palier tournant (20) se trouve sur le rail de guidage de courant (18) à proximité du premier raccord de sortie (5, 5'), les deux contacts de commutation (14, 15) étant en particulier agencés sur le rail de guidage de courant (18) de façon opposée l'un à l'autre en direction transversale (65).

4. Commutateur électrique selon la revendication 1, 2 ou 3,
caractérisé en ce que, au début du rail de guidage de courant (18), il est formé, en particulier en une pièce, un prolongement s'étendant entre les deux raccords d'entrée (3, 4), comme premier raccord (25) pour un condensateur d'antiparasitage (27), en ce qu'un second raccord (26) pour le condensateur d'antiparasitage (27) est avantageusement en liaison électrique avec le second raccord d'entrée (4), les raccords (25, 26) pour le condensateur d'antiparasitage (27) étant réalisés en particulier à la manière d'un raccord enfichable, et en ce que, le cas échéant, sur le côté opposé au système de contacts (10), il est formé, en particulier en une pièce à l'extrémité du rail de guidage de courant (18), une barrette (73) servant comme premier raccord de sortie (5').

5. Commutateur électrique selon une des revendications 1 - 4,
caractérisé en ce que le contact fixe (12) du système de contacts (10) est réalisé en une pièce avec le premier raccord d'entrée (3), en ce que, avantageusement, la partie de liaison électrique (17) sur le second raccord d'entrée (4) est constituée d'une partie de raccord (40), en forme de U, enfichée sur le second raccord d'entrée (4), en particulier au moyen d'une branche élastique (41), en ce que la partie de raccord (40) possède de plus, avantageusement, une barrette (42) qui sert comme second raccord de sortie (6), et en ce qu'il est formé, sur la partie de raccord (40), encore plus avantageusement, le second raccord (26) pour le condensateur d'antiparasitage (27), la partie de raccord (40) étant réalisée en particulier en une pièce avec la barrette (42) et le second raccord (26) pour le condensateur d'antiparasitage (27).

6. Commutateur électrique selon une des revendications 1 à 5,
caractérisé en ce que le contact fixe (13) pour l'autre système de contacts (11) est muni d'une barrette (66), qui sert comme premier raccord de sortie (5), le contact fixe (13) et la barrette (66) étant réalisés en particulier en une pièce, et en ce que, avantageusement, il existe une liaison électrique (24) du contact fixe (13) de l'autre système de contacts (11) vers l'électronique de commande (63).

7. Commutateur électrique selon une des revendications 1 à 6,
caractérisé en ce que la liaison électrique (23, 24) de l'électronique de commande (63) vers le rail de guidage de courant (18) ainsi que vers le contact fixe (13) de l'autre système de contacts (11) est réalisée comme ressort de contact (45) qui possède, en particulier, une structure ouverte latéralement, approximativement en forme de coeur, le ressort de contact (45) reposant avantageusement de façon élastique sur une surface de contact (46) sur le support de circuit (21) et, encore avantageusement, le ressort de contact (45) étant fixé à une pièce (47) sur le contact fixe (13) de l'autre système de contacts (11) ou du rail de guidage de courant (18), le cas échéant en pouvant facilement tourner, en ce que le ressort de contact (45) est enfiché sur la pièce (47) en particulier au moyen d'une partie (48) en forme de U et étant par exemple maté, encliqueté ou analogue avec la pièce (47) en prévoyant un jeu donné.

8. Commutateur électrique selon une des revendications 1 à 7,
caractérisé en ce que le raccord d'entrée (3,4) est réalisé comme bloc massif ayant un siège (38), qui possède, le cas échéant, un raccord à vis (39), pour la conduction électrique vers la source de tension, en particulier une surface sur le premier raccord d'entrée (3) formant le contact fixe (12), en ce que, avantageusement, les raccords d'entrée (3, 4) ainsi que les ressorts de contact (45) sont constitués d'un métal ayant une bonne conductibilité électrique, et en ce que, encore avantageusement, le rail de guidage de courant (18), la partie de raccord (40), ainsi que le contact fixe (13) sont fabriqués en un métal ayant une bonne conductibilité électrique, en particulier comme pièce cintrée estampée, en particulier le rail de guidage de courant (18) et le premier raccord d'entrée (3) étant constitués de cuivre, le second raccord d'entrée (4) ainsi que la partie de raccord (40) de laiton, et les ressorts de contact (45) vers le support de circuit (21) de bronze, de béryllium-cuivre ou analogue.

9. Commutateur électrique selon une des revendications 1 à 8,
caractérisé en ce que, concernant la source de tension, il s'agit de la tension alternative du réseau, de sorte que le raccord d'entrée (3, 4) sert comme raccord de réseau et le raccord de sortie (5, 5', 6) comme raccord de champ pour la bobine d'inducteur (62) du moteur électrique (61).

10. Commutateur électrique selon une des revendications 1 à 9,
caractérisé en ce que la force élastique agissant sur le premier bras de levier du contact de commutation (14, 15) est engendrée par un ressort de pression (43), et en ce que, avantageusement, un ergot (44) sur un axe (8), traversant le boîtier (2), de l'organe d'actionnement (7), le cas échéant sur un chariot (9) sur l'axe (8), agit sur le second bras de levier de sorte que le contact de commutation (14, 15), pour un déplacement déterminé de l'organe d'actionnement (7), repose sur le contact fixe (12, 13).

11. Commutateur électrique, l'intérieur (16) du boîtier (2) présentant une longueur (I) s'étendant en direction longitudinale (64) correspondant à la direction de déplacement de l'axe (8) de l'organe d'actionnement (7), une largeur (b) s'étendant en direction transversale (65) par rapport à la direction longitudinale (64) et dans le plan de l'axe (8) de l'organe d'actionnement (7), et une profondeur (t) s'étendant aussi bien perpendiculairement à la direction longitudinale (64) qu'à la direction transversale (65), selon une des revendications 1 à 10,
caractérisé en ce que la longueur (I) de l'intérieur (16) du boîtier correspond à la longueur du contact de commutation (14, 15), en ce que la profondeur (t) de l'intérieur (16) du boîtier est plus grande que la largeur, s'étendant en direction de la profondeur (t), du contact de commutation (14, 15) plus la largeur de composants électriques supplémentaires contenus à l'intérieur (16) du boîtier jusqu'à trois fois la largeur du contact de commutation (14, 15), et en ce que la largeur (b) de l'intérieur (16) du boîtier correspond à la somme des hauteurs des deux systèmes de contacts (10, 11), du diamètre de l'axe (8) de l'organe d'actionnement (7) ou de la hauteur d'un chariot (9) sur l'axe (8) de l'organe d'actionnement (7), se trouvant à l'intérieur (16) du boîtier, servant à agir sur les systèmes de contacts (10, 11), ainsi que, dans le cas d'un agencement dans le boîtier (2), de la hauteur du raccord d'entrée (3, 4) et/ou du raccord de sortie (5, 6).

12. Commutateur électrique selon une des revendications 1 à 11,
caractérisé en ce que deux systèmes de contacts (10, 11) sont agencés sur des côtés opposés l'un à l'autre de l'axe (8) de l'organe d'actionnement (7) et généralement en direction transversale (65) à l'intérieur (16) du boîtier.

13. Commutateur électrique selon une des revendications 1 à 12,
caractérisé en ce que le boîtier (2), dans un plan formé par la direction longitudinale (64) et la direction transversale (65), est divisé en un socle (29) et un couvercle (30), le socle (29) étant réalisé pour recevoir les systèmes de contacts (10, 11) et un rail de guidage de courant (18) servant de conducteur électrique, ainsi que, le cas échéant, le chariot (9) ou l'axe (8) de l'organe d'actionnement (7), en ce que, avantageusement, un guide (59) et un serre-flan pour le chariot (9) sont agencés dans le socle (29) ou dans le couvercle (30), et en ce que, encore avantageusement, sur la face externe du socle (29) ou du couvercle (30), il se trouve au moins une surface de guidage (60, 60') s'étendant en direction longitudinale (64), parallèlement à l'axe (8) de l'organe d'actionnement (7), l'organe d'actionnement (7) enjambant la surface de guidage (60, 60').

14. Commutateur électrique selon une des revendications 1 à 13,
caractérisé en ce que, concernant le support de circuit (21) pour l'électronique de commande (63), il s'agit d'une plaquette conductrice, d'une plaquette en céramique ou analogue, en ce que, avantageusement, le support de circuit (21) est agencé dans le couvercle (30), le support de circuit (21) étant agencé en particulier dans un plan défini par la direction longitudinale (64) et la direction transversale (65), s'étendant parallèlement à l'axe (8) de l'organe d'actionnement (7), de sorte qu'un balai (49) se trouvant sur le chariot (9) est en contact avec une voie de potentiomètre (50) sur le support de circuit (21), en ce que, encore avantageusement, le semi-conducteur de puissance (22), non logé, se trouve directement sur le support de circuit (21), par exemple au moyen d'une liaison à brasage, le semi-conducteur de puissance (22) et la face équipée du support de circuit (21) étant en particulier en regard des contacts de commutation (14, 15), et en ce que, encore plus avantageusement, le support de circuit (21) est disposé, directement ou par l'intermédiaire d'un corps de refroidissement, comme une plaque de cuivre ou analogue, par sa face opposée à la face équipée, sur une paroi (51) à l'intérieur (16) du boîtier, en particulier dans le couvercle (30).

15. Commutateur électrique selon une des revendications 1 à 14,
caractérisé en ce que, sur l'organe d'actionnement (7), il est agencé une roue (52) pour le réglage d'une butée (53) coopérant avec le boîtier (2) pour limiter le déplacement de l'organe d'actionnement (7) de sorte que l'axe (54) de la roue de réglage (52), en direction transversale (65), est décalé par rapport à l'axe (8) de l'organe d'actionnement (7), en ce que, avantageusement, l'organe d'actionnement (7) peut être arrêté dans des positions de déplacement déterminées au moyen d'un bouton d'arrêt (56) coopérant avec un coulisseau d'arrêt (55) maintenu sur l'organe d'actionnement (7) et guidé, le cas échéant, sur la face externe du boîtier (2), le bouton d'arrêt (56) étant mobile dans un dôme (57) se trouvant sur la face externe du boîtier (2) contre un ressort (58) se trouvant dans le dôme (57), plongeant dans le bouton d'arrêt (56), de sorte que le bouton d'arrêt (56) peut être complètement immergé dans le dôme (57), et en ce que, encore avantageusement, le coulisseau d'arrêt (55) qui est en particulier réglable au moyen de la roue de réglage (52) et porte, le cas échéant, sur la face associée à la roue de réglage (52), la butée (53), est agencé en direction transversale (65) et, le cas échéant, en direction de profondeur (69) de façon décalée par rapport à l'axe (8) de l'organe d'actionnement (7).

16. Commutateur électrique selon une des revendications 1 à 15,
caractérisé en ce que, sur le boîtier (2), il est agencé un siège (28) pour le condensateur d'antiparasitage (27), le siège (28) se raccordant, en direction transversale (65), en particulier sur le côté sur lequel se trouvent les raccords d'entrée (3, 4), au boîtier (2) de sorte que le condensateur d'antiparasitage (27) contacte des raccords associés (25, 26) sur le second raccord d'entrée (4) et le rail de guidage de courant (18), en ce que, avantageusement, le siège (28) est constitué de deux parties qui sont réalisées en particulier en une pièce avec le socle (29) et le couvercle (30), et en ce que, encore avantageusement, un espace libre (31) se trouve dans le siège (28) vers le côté externe du boîtier (2) pour un raccord de mise à la masse (32) ou analogue du condensateur d'antiparasitage (27).

17. Commutateur électrique selon une des revendications 1 à 16,
caractérisé en ce que, en direction transversale (65) sur le boîtier (2), à la face sur laquelle se trouvent les raccords d'entrée (3, 4), ou, le cas échéant, au siège (28) pour le condensateur d'antiparasitage (27), se raccorde un moyen de décharge de traction (33) pour un câble, en particulier pour un câble de réseau de l'outil électrique, par rapport aux raccords d'entrée (3, 4), le moyen de décharge de traction (33) étant, en particulier, intégré en une pièce dans le socle (29) du boîtier (2), le moyen de décharge de traction (33) étant constitué, avantageusement, d'un récepteur de câble (34) avec une âme en saillie (35) et une bride (36) suspendue dans l'âme (35), pouvant être vissée dans le récepteur de câble (34), la bride (36) constituée en particulier de la même matière synthétique que le boîtier (2) possédant encore avantageusement deux surfaces ayant des courbures différentes, de sorte que des câbles de différents diamètres peuvent être reçus dans le moyen de décharge de traction (33) par rotation de la bride (36), et, encore plus avantageusement, la bride (36) présentant un point destiné à la rupture (74) sur une face du récepteur de câble (34) de sorte que la bride (36), lors du montage du câble, peut être rompue et suspendue dans l'âme (35) pour compléter le moyen de décharge de traction (33).

18. Commutateur électrique selon une des revendications précédentes, en particulier pour l'agencement dans une poignée allongée d'un outil électrique,
caractérisé en ce que la longueur (I) de l'intérieur (16) du boîtier vaut entre 18 et 25 mm, en particulier environ 21 mm, la largeur (b) de l'intérieur (16) du boîtier entre 30 et 40 mm, en particulier environ 33 mm, et la profondeur (t) de l'intérieur (16) du boîtier entre 10 et 20 mm, en particulier environ 13 mm, en ce que le siège (28) se trouvant le cas échéant sur le boîtier (2) pour le condensateur d'antiparasitage (27) présente une longueur entre 20 et 35 mm, en particulier environ 27 mm, ainsi qu'une largeur entre 15 et 30 mm, en particulier environ 24 mm, et en ce que le moyen de décharge de traction (33) agencé le cas échéant sur le boîtier (2) présente une longueur entre 20 et 30 mm, en particulier environ 24 mm, ainsi qu'une largeur entre 10 et 20 mm, en particulier environ 15 mm.
